# EUROPEAN PATENT SPECIFICATION

(11) **EP 2 910 614 B1**
(45) Date of publication and mention of the grant of the patent: **08.03.2017**
(21) Application number: 14170614.3
(22) Date of filing: 30.05.2014
(51) Int. Cl.: C09D 183/16, C09K 11/02

(54) **Coating composition having polysilazane and wavelength converting agent and wavelength converting sheet prepared using the same**
Beschichtungszusammensetzung mit Polysilazan und Wellenlängenkonvertierungsmittel und unter Verwendung davon vorbereitetes Wellenlängenkonvertierungsblatt
Composition de revêtement ayant du polysilazane, agent de conversion de longueur d'onde et feuille de conversion de longueur d'onde préparée à l'aide de celui-ci

(30) Priority: 20.02.2014 KR 20140019723
(43) Date of publication of application: 26.08.2015
(73) Proprietor: Korea Institute of Science and Technology, Seoul 136-791 (KR)
(72) Inventor: Cho, So Hye, 130-856 Seoul (KR); Han, Joon Soo, 463-825 Gyeonggi-do (KR); Lee, Seung Yong, 427-100 Gyeonggi-do (KR); Park, Jong Ku, 472-120 Gyeonggi-do (KR); Jung, Dong Eui, 136-784 Seoul (KR); Yoo, Bok Ryul, 135-970 Seoul (KR)
(74) Representative: advotec.

(56) References cited:
- US-A1- 2013 309 437
- DATABASE WPI Week 200416 Thomson Scientific, London, GB; AN 2004-160265 XP002734519, & JP 2003 261869 A (SHOWA DENKO KK) 19 September 2003 (2003-09-19)

## Description

### CROSS-REFERENCE TO RELATED APPLICATION

This application claims priority to and the benefit of Korean Patent Application No. 2014-0019723, filed on February 20, 2014.

### BACKGROUND

### 1. Field of the Invention

The present invention relates to a coating composition having excellent visible light transmittance and photoluminescence property, and a wavelength converting sheet prepared using the same.

### 2. Discussion of Related Art

Polysilazane is the general term for a polymer with a regular arrangement of silicon and nitrogen, and has a structure of [-R₁R₂Si-NR₃-]ₙ. The functional groups, R₁, R₂, and R₃ may be hydrogen or an organic material. When all the functional groups are hydrogen, it is called perhydropolysilazane, and when the functional groups are hydrocarbon, it is called organopolysilazane. Polysilazane has a property of being converted into a silica-based material, [-R₁R₂Si-O-]ₙ by being reacted with moisture at 200°C or less. During the converting process, there is almost no volume change of polysilazane, and thus the polysilazane is mainly used as the application for obtaining a compact silica thin film. In addition, the polysilazane is applied to an insulating film, and a transparent protecting film, and passivation for a touchscreen, a tempered glass, an OLED, a solar cell, a protecting film, and the like. Such a thin film exhibits a high-strength property of hardness 8H or more and also excellent heat resistance, fire resistance, wear resistance, oxidation resistance, and the like (Japanese Patent Publication No. 2013214427 and US Patent No. 8563129B2). In addition, after curing, perhydropolysilazane exhibits a hydrophilic surface property and organopolysilazane exhibits a hydrophobic surface property, and thus they may be variously used to suit each of the applications. When the polysilazane is compared with a conventional silicon-based polymer (for example, PDMS, SOG (spin-on glass), polysilsesquioxane), it has high content of silica (SiO₂) and thus the thin film prepared using the polysilazane has excellent surface hardness, chemical resistance, visible light transmittance, and adhesive property.

In order to fix on a surface of an organic material or inorganic material, polysilazane is mixed with the organic material or inorganic material, and then used in some cases. The mixed solution is applied on a substrate, and then heated at 200°C or cured at a low temperature of room temperature to 100°C or less using a catalyst to prepare a thin film with dimorph materials dispersed in a silica parent material. In this case, there are advantages in that the silica thin film thus prepared has strong adhesive strength with the surfaces of the plastic, metal, and ceramic used as a substrate and high surface hardness. Especially, in case of requiring high transmittance at a wavelength of visible light, it exhibits high applicability for a scratch-resistant coating, oxidation-resistant coating, corrosion-resistant coating, silver anti-bacterial coating, solar cell, lighting, or display protecting film, for example.

For a wavelength converting sheet, in order to absorb only a portion of wavelengths among light for a wavelength conversion, and exhibit high transmittance of 90% or more at the rest wavelength area, a matrix material having high transmittance at ultraviolet ray, visible ray, and infrared ray areas is required. In general, a matrix material used for a wavelength conversion is a transparent resin such as epoxy-based (-C-O-C-) or silicone-based (-C-O-Si-C-) transparent resin, and also acryl-based, vinyl-based, and carbonate-based transparent polymers. In order to form a coating solution, these resins and polymers are mixed with a wavelength converting agent and then the mixed solution is diluted with a solvent, and then used (Korean Patent No. 10-0682928; Korean Patent No. 10-1034473).

When a wavelength converting sheet is formed by using the resin and polymer coating solution including the wavelength converting agent, there are disadvantages in that a yellowing phenomenon occurs and gradually light transmittance is decreased at the time of being exposed to light sources for a long period of time. In addition, the resin and polymer have low heat-resistance and do not block the permeations of water and atmospheric gases, and thus at the time of being exposed for a long period of time, photobleaching of the included wavelength converting agent is generated, and luminescence performance is deteriorated, and thereby, efficiency of the wavelength conversion is gradually decreased.

In order to solve these problems, use of an inorganic matrix such as glass, and silica (SiO₂) has been proposed as a material of a wavelength converting sheet (J.Non-Crystal.Sol. 357, 2011, 2435-2439). On the other hand, such an inorganic material requires a high temperature sintering of 700°C or more, and also there may be problems in that during a sintering process, a substrate may be deformed, a wavelength converting agent may be modified, or cracks may occur on a wavelength converting thin film.

In order to solve the problems of the inorganic material thin film at the time of high temperature sintering, sol-gel silica may be used in some cases (J Luminescence, 2013, 135, 15∼19). However, in this case, during a process of gelating a sol precursor, volumetric shrinkage (50% or more) is significantly accompanied and thus cracks and partial defect occurs. Therefore, in order to prepare a transparent thin film without defects, a special operation such as pressing sintering is required.

US 2013/309437 A1 discloses polysilazane, particularly perhydrosilazane dissolved at 5 - 35 wt% concentration in di-n-butyl ether and admixed with luminescent material with a preferential particle size of 1 - 30 µm.

### Citation List of Prior Art

### Patent Document

Patent Document 1: Japanese Patent Publication No. 2013-214427
Patent Document 2: US Patent No. 8,563,129
Patent Document 3: Korean Patent No. 10-0682928
Patent Document 4: Korean Patent No. 10-1034473
Patent Document 5: US 2013/309437 A1

### Non-Patent Document

Non-Patent Document 1: Journal of Non-Crystalline Solids, 357, 2011, 2435∼2439
Non-Patent Document 2: Journal of Luminescence, 2013, 135, 15∼19

### SUMMARY OF THE INVENTION

The present invention is directed to a coating composition having excellent visible light transmittance and photoluminescence property, and a wavelength converting sheet prepared using the same.

According to an aspect of the present invention, there is provided a coating composition including a solvent, polysilazane, and a wavelength converting agent and having 50% or more of visible light transmittance with respect to an aqueous solution, when, in order to analyze the transmittance of the coating solution, the coating solution is added to a quartz cell of 10 mm x 10 mm, and then, the transmission spectrum analysis of the coating solution is performed at an area of 500 to 700 nm by using an UV-Vis spectroscope and the transmission ratio is represented as a relative value on the basis of an aqueous solution (100 % of transmission ratio), wherein the wavelength converting agent is at least one selected from a group consisting lanthanide-based compound dissolved in a concentration of solubility or less, a transition-metal compound dissolved in a concentration of solubility or less, organic luminous body dissolved in a concentration of solubility or less, a semiconductor nanocrystal having a particle size of 2 to 40 nm and inorganic nano fluorescent substance powders having a particle size of 100 nm or less, wherein the inorganic nano fluorescent substance powder is at least one selected from a group consisting of (AE)Ga₂S₄:Eu²⁺ (AE)S:Eu²⁺, (AE)M₂O₄:Eu²⁺ (AE, alkali earth metal, is at least one of Ba, Ca, and Sr, and M is at least one of Si and Ge), LaPO₄:Eu, LaVO₄:Eu, NaYF₄:Er, Yb, ZnO, Y₂O₃:Eu (and/or Tb), CaSiAlN₃ and SrSN₂.

The polysilazane may be represented by the following Chemical Formula 1: 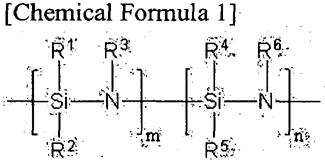 (in Chemical Formula 1, m and n are an integer of 1 to 500; R¹, R², R⁴, and R⁵ are hydrogen, methyl, vinyl, or phenyl, respectively, and may be the same or different from each other; and R³ and R⁶ are hydrogen, trimethylsilyl, or alkoxysilylpropyl, and may be the same or different from each other)

The content of polysilazane may be 1 to 99 vol% with respect to the total composition, and the content of wavelength converting agent may be 0.0001 to 50 wt% with respect to the weight of the polysilazane.

When the wavelength converting agent is one or more organic material luminous bodies, this/these can be selected from the group consisting of organic monomers including aromatic, alicyclic, ether, halogenated hydrocarbon, or terpene functional groups, and polymers thereof and also at least one of nitrate-based, carbonate-based, halogen-based, sulfate-based, oxidation-based, phosphate-based, acetate, acetoacetyl, or coordinated organic compound-based lanthanide-based compound and transition-metal compound; also may include one or more semiconductor nanocrystals (quantum dots) selected from the group consisting of CdTe/CdSe, CdS(Se)/CdTe, CdS(Se)/ZnTe, CuInS(Se)/ZnS(Se), Cu(GaIn)S(Se)/ZnS(Se), ZnTe/CdS(Se), GaSb/GaAs, GaAs/GaSb, Ge/Si, Si/Ge, PbSe/PbTe, PbTe/PbSe, CdTe, CdSe, ZnTe, CuInS, CuGaS, Cu(Ga,In)S, CuGaSnS(Se), CuGaS(Se), CuSnS(Se), ZnS, CuInSe. CuGaSe, ZnSe, ZnTe, GaSb, GaAs, Ge, Si, PbSe, PbTe, PbTe, and PbSe, which have a particle size of 2 to 40 nm; and also may include oxidation-based, sulfide-based, aluminum-based, halogen-based, nitrogen-based, and silicate-based inorganic nano fluorescent substance powders, which have a particle size of 100 nm.

According to another aspect of the present invention, there is provided a sheet prepared by applying the coating composition on a substrate and then curing, in which the sheet may have 50% or more of visible light transmittance with respect to air. In addition, the sheet may further include a polysilazane protecting layer. Examples of the substrate may include any one of a plastic, a stainless steel, a glass, quartz, a solar cell, an LED chip, and a fiber, but the present invention is not limited thereto. The curing may be performed by using one or more methods of heating, illumination, a room temperature arrangement, a water injection, and a catalyst injection.

### BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:
FIG. 1 is a schematic diagram illustrating a process of preparing a coating solution and a sheet according to the present invention;
FIG 2 is a chemical structural formula of a coumarin polymer used in Example 3;
FIG. 3A is a scanning electron microphotograph of Y₂O₃: Tb, Yb and FIG. 3B is a transmission electron microphotograph of ZnO;
FIG. 4 is photographs of a thin film prepared with a coating solution of Example 23, which are obtained under visible rays and ultraviolet rays (FIG. 4A: under visible rays, FIG. 4B: under ultraviolet rays of 365 nm wavelength);
FIG. 5 is a scanning electron microphotograph of a cross section of a thin film prepared with the coating solution of Example 23;
FIG. 6 is a graph illustrating hydrogen nuclear magnetic resonance spectrum analysis results of coating solutions of Examples 10, 12, 14, 15, 16, 17, 18, 19, 21, and 22 (6A to 6J in order);
FIG. 7 is a graph illustrating photoluminescence spectrum analysis results of coating solutions of Examples 1 to 13, 17, and 24 (FIGS. 7A to 7O in order);
FIG. 8 is results of measuring photoluminescence property and light transmittance of a coating solution of Example 1 (FIG. 8A: light transmittance, FIG. 8B: photoluminescence);
FIG. 9 is photographs illustrating photoluminescence properties of coating solutions of Examples 10 and 12 (FIG. 9A: under visible rays, FIG. 9B: under ultraviolet rays of 254 nm, FIG. 9C: under ultraviolet rays of 365 nm; and the left photograph and the right photograph represent a coating solution of Example 10 and a coating solution of Example 12, respectively);
FIG. 10 is a graph illustrating results of measuring (a) photoluminescence properties and (b) light transmittances of coating solutions of Comparative Examples 1 to 3;
FIG 11 is results of measuring transmittances of thin films according to Example 1 and Comparative Examples 1 to 3;
FIG. 12 is photographs of thin films of Example 1 and Comparative Example 2 (Example 1: FIG. 11A, Comparative Example 2: FIG. 11B);
FIG. 13 is a graph illustrating photoluminescence properties of thin films of Example 1 and Comparative Examples 1 and 2; and
FIG. 14 is results of analyzing photobleaching of thin films of Example 1 and Comparative Example 2.

### DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the scope of the invention.

In order to solve the above-described problems, the present invention provides a transparent wavelength converting coating composition including a polysilazane solution, in which the composition has high light transmittance and can be sintered at a low temperature, and there is almost no volumetric shrinkage at the time of being cured.

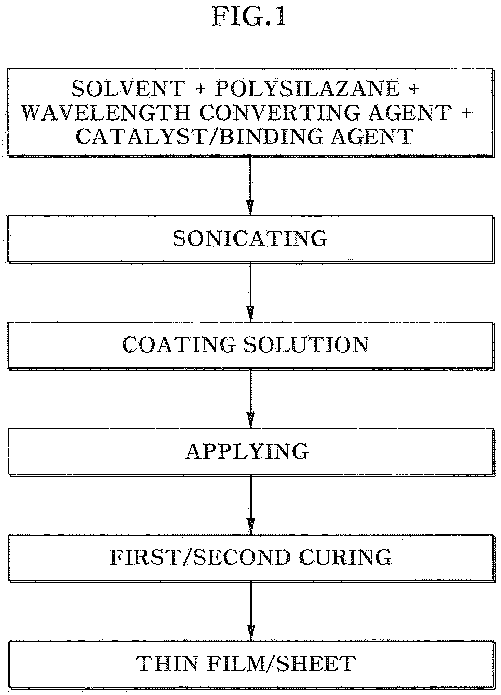

FIG. 1 is a schematic diagram illustrating processes of preparing a coating composition and a thin film according to the present invention. Referring to FIG. 1, the coating composition (coating solution) may be prepared by mixing a solvent, polysilazane, a wavelength converting agent, a catalyst and/or a binding agent, and metal particles, and then sonicating the mixed product. The coating composition thus prepared is applied on a substrate, and then cured to form a thin film.

An aspect of the present invention may be a coating composition including a solvent, polysilazane, and a wavelength converting agent. In other words, the composition according to the present aspect includes a wavelength converting agent along with polysilazane.

Examples of the solvent may include a petroleum solvent, an aromatic solvent, an alicyclic solvent, ether, halogenated hydrocarbon, and a terpene mixture, and a combination thereof. The solvents of 1 to 99 wt% with respect to the total coating composition may be mixed and then used. The content of the solvent may be properly adjusted according to a thickness of a thin film to be formed and a coating method. When the content of the solvent is less than 1 wt%, there is a fire risk by intensely reacting the coating solution with moisture at the time of being exposed to moisture, while when it exceeds 99.9 wt%, a thickness of the thin film to be formed is too thin, and thus there may be no effective wavelength converting effect.

Polysilazane may be represented by the following Chemical Formula 1. 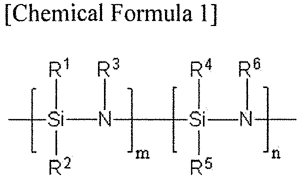 (in Chemical Formula 1,
m and n are an integer of 1 to 500,
R¹, R², R⁴, and R⁵ are hydrogen, methyl, vinyl, or phenyl, respectively, and may be the same or different from each other; and
R³ and R⁶ are hydrogen, trimethylsilyl, or alkoxysilylpropyl, and may be the same or different from each other.)

The content of polysilazane is preferably 1 to 99 wt% with respect to the total coating composition.

Polysilazane is a polymer compound ([-SiR₂-NR-]ₙ) composed of nitrogen and silicon. The polysilazane is oxidized due to an external stimulus such as a heating at a low temperature of 200°C or less, moisture, catalysis, and light, and is modified into a silica-based [-SiR₂-X-]ₙ (X = oxygen, or a mixture of oxygen and nitrogen) material by partially or totally converting nitrogen into oxygen during the oxidation process. The silica-based inorganic material, that is a curable material, has excellent transmittance, and its volumetric shrinkage is small during the curing process, and thus there is no substrate deformation or crack occurrence. The material that is firstly cured is totally oxidized by a method such as a high temperature sintering, a catalyst addition, and a water or oxygen injection, and thus it is possible to modify into pure silica.

In this aspect, the reasons why the coating composition including polysilazane is used in order to prepare a wavelength converting sheet or thin film are as follows. The reasons are because since the wavelength converting sheet formed from polysilazane has high light transmittance, excellent heat resistance, excellent chemical resistance, low water and oxygen transmittance, and no yellowing phenomenon, there is a small photobleaching phenomenon and decrease in luminescence efficiency is low even when it is exposed to a light source, such as sunlight and illumination for a long period of time. Particularly, the reason is because since the polysilazane solution has very high visible light transmittance of 80% or more, and high solubility or degree of dispersion in a material such as an organic compound, lanthanide-based and transition-metal compounds, semiconductor nanocrystals, and an inorganic nano fluorescent substance, even when it is mixed with these materials, it maintains high transparency, and also when such a mixture is applied on a substrate to prepare a thin film or a sheet, it is possible to allow the thin film or sheet to maintain high transparency.

A wavelength converting agent is classified into a down-converting agent and a up-converting agent, in which the down-converting agent can convert high-energy light into low-energy light, and on the other hand, the up-converting agent can convert low-energy light into high-energy light. Examples of the wavelength converting agent include organic luminous body, lanthanide-based and transition-metal compounds, semiconductor nanocrystals, and inorganic nano fluorescent substance powders, all in accordance with claim 1.

Examples of the organic luminous body may include an organic monomer including aromatic hydrocarbon, alicyclic hydrocarbon, ether, halogenated hydrocarbon, or terpene functional groups, and also a polymer thereof. In addition, these materials may be used in combination. Specifically, the organic luminance body may be coumarin, rhodamine, porphyrin, fluorescein, lumogen, cyanomethylene, and the like, and one or more of them may be used.

Examples of the lanthanide-based element may include one or more of Ce, Pr, Nd, Sm, Eu, Gd, Tb, Dy, Ho, Er, Tm, and Yb, and examples of the transition-metal element may include one or more of Sc, Ti, V, Cr, Mn, Fe, Co, Ni, Cu, and Zn. Examples of a source of the lanthanide-based and transition-metal element ion may include nitrate-based, carbonate-based, halogen-based, sulfate-based, oxidation-based, phosphate-based, acetate, acetoacetyl, or coordinated organic compound-based compound.

Examples of the semiconductor nanocrystals may include semiconductor nanocrystals having a core/shell structure, such as CdTe/CdSe, CdS(Se)/CdTe (here, CdS(Se) means that a part of S in CdS is substituted by Se, and the total of S + Se becomes 1 equivalent), CdS(Se)/ZnTe, CuInS(Se)/ZnS(Se), Cu(GaIn)S(Se)/ZnS(Se), ZnTe/CdS(Se), GaSb/GaAs, GaAs/GaSb, Ge/Si, Si/Ge, PbSe/PbTe, or PbTe/PbSe (here, CdTe/CdSe means that CdTe is present in a core and CdSe is present in a shell), and also semiconductor nanocrystals including CdTe, CdSe, ZnTe, CuInS, CuGaS, Cu(Ga,In)S, CuGaSnS(Se), CuGaS(Se), CuSnS(Se), ZnS, CuInSe, CuGaSe, ZnSe, ZnTe, GaSb, GaAs, Ge, Si, PbSe, PbTe, PbTe, and PbSe. In addition, these materials may be combined and then used. A size of the semiconductor nanocrystal may be 2 to 40 nm, preferably.

Examples of the inorganic nano fluorescence body powder may include oxidation-based, sulfide-based, aluminum-based, halogen-based, nitrogen-based, and silicate-based powders, which have a particle size of 100 nm or less. The materials of the inorganic nano fluorescence body powder may be, for example, (AE)Ga₂S₄:Eu²⁺, (AE)S:Eu²⁺, (AE)M₂O₄:Eu²⁺ (AE, alkali earth metal, is at least one of Ba, Ca, and Sr, and M is at least one of Si and Ge), Y₃Al₅O₁₂:Ce³⁺ (hereinafter, referred to as YAG), LaPO₄:Eu, LaVO₄:Eu, NaYF₄:Er, Yb, ZnO, Y₂O₃:Eu (and/or Tb), CaSiAlN₃, SrSN₂, and the like, and one or more of them may be used.

The wavelength converting agent may be combined in an amount of 0.0001 to 50 wt% with respect to the total coating composition, and then used. When the wavelength converting agent is less than 0.0001 wt%, efficiency of the wavelength conversion is decreased, and thus it is difficult to be applied as a wavelength converting sheet. On the other hand, when it exceeds 50 wt%, it is difficult to obtain a high-quality cured film, and light transmittance may be decreased.

The coating solution according to this aspect is transparent. A transparent thin film may be formed by using a transparent coating solution, and when the transparent thin film is used, the efficiency of light conversion may be improved. The transmittance of the coating solution may be determined according to the solubility and size of the particle of the wavelength converting agent mixed. For example, the transparent coating solution may be prepared by dissolving a lanthanide-based compound, transition-metal compound, and organic luminous body in a concentration of solubility or less, and the transparent coating solution may be prepared by using the semiconductor nanocrystal and inorganic nano fluorescent substance powder of a small size particles of 100 nm or less. When insoluble particles like the semiconductor nanocrystal and inorganic nano fluorescent substance powder are dispersed in a solvent, light is not transmitted at a wavelength area that is four times or less the particle size, but is reflected, and thus when the particle size is larger, the coating solution is opaque. For example, in case of the particle having a size of 100 nm, the particle reflects the light having a wavelength of less than or equal to the boundary, which is a 400 nm wavelength corresponding to four times of the particle size and transmits the light having a wavelength of more than or equal to the boundary, which is the 400 nm wavelength corresponding to four times of the particle size. Therefore, the dispersed particles should have a small size of 100 nm or less in order to prepare a coating solution having high transmittance in the wavelength areas of visible rays and infrared rays.

The transmittance of the coating solution according to this aspect is 50% or more, more preferably 60% or more, most preferably 70% or more, and still most preferably 80% or more with respect to the aqueous solution.

The coating composition according to this aspect may further include additives. Examples of the additives may include a curable catalyst, a binding agent, metal particles, and a combination thereof.

The curable catalyst plays a role in helping a curing process, in which polysilazane is converted into silica by catalyzing a curing of the coating composition at a temperature of 200°C or less. The curable catalyst is typically an organic base catalyst and metal catalyst.

Examples of the organic base catalyst may include N,N'-trimethylenebis(1-methylpiperidine), bis(2-dimethylaminoethyl)ether, N,N'-dimethylpiperazine, 4-(dimethylamino)pyridine, and amines such as N,N'-dimethylcyclohexylamine, N,N-dimethylbenzylamine, N,N,N',N',N"-pentamethyldiethylenetriamine, N,N-dimethylcetylamine, trihexylamine, triethylamine, and ethylenediamine, and the like. They may be used alone or in a combination of two or more. The organic base catalysts may be combined in an amount of 0.1 to 5 wt% with respect to the total coating composition, and then used. When it is less than 0.1 wt%, the catalytic activity may be decreased, and when it exceeds 5 wt%, a decrease in transmittance of a wavelength converting layer may occur.

Examples of the metal catalyst may include an organic metal compound, an inorganic acid complex, or an organic acid complex including metals such as palladium, platinum, rhodium, nickel, iridium, ruthenium, osmium, and cobalt. In addition, examples of the metal catalyst may include metal fine particles, or precursors capable of forming the metal fine particles. The metal catalyst may be combined in an amount of 0.01 to 1 wt% with respect to the total coating composition, and then used. When the content of the metal catalyst is less than 0.01 wt%, the catalytic activity may be decreased, and when it exceeds 1 wt%, the light transmittance of the wavelength converting layer may be decreased.

The adhesive strength between a substrate and a cured body may be improved by a binding agent. Examples of the binding agent may include 3-aminopropyl(triethoxysilane), N-(2-aminoethyl)-3-aminopropyltriethoxysilane, N-(3-ethoxysilylpropyl)-4,5-dihydroimidazole, 3-aminopropyl(methyldiethoxysilane), vinyltriethoxysilane, trifluoropropyltrimethoxysilane, cyanoethyltrimethoxysilane, methacryloylpropyltriethoxysilane, (3-acryloylpropyl)trimethoxysilane, vinyltriethoxysilane, 3-isocyanatopropyltriethoxysilane, or a combination thereof. The binding agent may be preferably combined in an amount of 0.1 to 5 wt% with respect to the total coating composition, and then used. When the binding agent is less than 0.1 wt%, the adhesive strength between a substrate and a cured body may not be improved, and when the binding agent is more than 5 wt%, the transmittance of the wavelength converting layer may be decreased or it may be difficult to form a high-quality thin film.

The metal particles play a role in increasing wavelength conversion efficiency of the wavelength converting agent by using the metal particles along with a wavelength converting agent. Such a role of the metal particles is exhibited by the phenomenon of amplifying luminescence of adjacent wavelength converting agent by the phenomenon of Surface Plasmon Resonance (SPR) on a surface thereof. Examples of the metal particles may include gold, silver, platinum, and copper particles, their shapes and sizes may be controlled in order to generate Surface Plasmon Resonance on the surfaces thereof.

Another aspect of the present invention may be a wavelength converting thin film prepared by using the coating composition according to the aspect as described above.

The thickness of the wavelength converting thin film may be preferably 10 nm to 10 cm, more preferably, 10 nm to 1 cm, and most preferably 100 nm to 500 µm.

The transmittance of the wavelength converting thin film is 50% or more, more preferably 60% or more, and most preferably 70% or more with respect to air.

A thin film may be formed by mixing a solvent, polysilazane, a wavelength converting agent, and/or additives, then sonicating the mixture thus obtained to prepare a coating composition (coating solution), applying the coating composition thus prepared on a substrate, and then curing the coating composition applied on the substrate. The method for applying the coating composition on the substrate may be, but is not limited to, a non-vacuum thin-film process such as a doctor blade coating method, a screen coating method, a spin coating method, a spray coating method, and a paint coating method. The substrate may be, but is not limited to, a plastic, a stainless steel, a glass, quartz, a solar cell, an LED chip, and a fiber.

The thin film according to this aspect may be constituted by a plurality of layers. That is, a first thin film may be formed by using a coating solution having a first composition, and then a second thin film may be formed on the first thin film by using a coating solution having a second composition that is different from the first composition.

In addition, a protecting film may be formed by coating a polysilazane solution without a wavelength converting agent on the thin film according to this aspect. This way, lifespan of the wavelength converting thin film according to this aspect may be improved.

Hereinafter, the present invention will be described in more detail with reference to Examples and Comparative Examples. However, the present invention is not limited thereto.

### Examples 1 to 24

### Preparation of Coating Composition

To a glass container, 0.8 g of a perhydropolysilazane solution and 3.2 g of dibutylether were added; a wavelength converting agent and an additive were added in the compositions listed in Table 1; the glass container was sealed; and the mixture thus obtained in the glass container was sonicated in a ultrasonic wave water bath until a homogenized solution is obtained to obtain a coating composition.

**[Table 1]**

| | Composition of coating solution | | | Transmittance of coating solution (%) |
|---|---|---|---|---|
| | Wavelength converting agent 1 | Wavelength converting agent 2 | Additive (g) | |
| Example 1 | Coumarin 6, 0.0005 g | - | - | 98.8 |
| Example 2 | Rhodamine 6G, 0.001 g | - | - | 99.0 |
| Example 3 | Coumarin polymer, 0.001 g | - | - | 92.2 |
| Example 4 | Coumarin 6, 0.0005 g | Rhodamine B, 0.001 g | - | 99.0 |
| Example 5 | CdSe 490 nm luminescence nanoparticles, 0.001 g | - | Chloroform, 0.1 g | 99.8 |
| Example 6 | CdSe 620 nm luminescence nanoparticles, 0.001 g | - | Hexane, 0.1 g | 99.7 |
| Example 7 | Y₂O₃:Tb, Yb nanoparticles, 0.01 g | - | Hexane, 0.1 g | 91.2 |
| Example 8 | ZnO nanoparticles, 0.01 g | - | Hexane, 0.1 g | 92.8 |
| Example 9 | Y₂O₃:Tb, Yb nanoparticles, 0.01 g | ZnO nanoparticles, 0.01 g | Hexane, 0.2 g | 92.1 |
| Example 10 | Tb(thd)₃, 0.05 g | - | - | 98.9 |
| Example 11 | Coumarin 6, 0.0005 g | CdSe 490 nm luminescence nanoparticles, 0.001 g | Chloroform, 0.1 g | 99.0 |
| Example 12 | Eu(thd)₃, 0.05 g | - | - | 97.9 |
| Example 13 | Tb(thd)₃, 0.01 g | Eu(thd)₃, 0.01 g | - | 98.7 |
| Example 14 | Y(OiPr)₃, 0.150 g | - | Toluene, 0.600 g | 99.4 |
| Example 15 | Ce(acac)₃, 0.01 g | - | - | 99.9 |
| Example 16 | Ce(acac)₃, 0.01 g | Tb(thd)₃, 0.010 g | - | 99.5 |
| Example 17 | Cr(acac)₃, 0.01 g | - | - | 99.4 |
| Example 18 | Ti(OBu)₄, 0.20 g | - | - | 97.3 |
| Example 19 | Zn(OAc)₂, 0.01 g | - | - | 98.9 |
| Example 20 | Tb(thd)₃, 0.01 g | - | Toluene, 0.600 g | 99.3 |
| Example 21 | Tb(thd)₃, 0.05 g | - | TMBP, 0.0980 g | 98.7 |
| Example 22 | Tb(thd)₃, 0.05 g | - | APTES, 0.200 g | 98.5 |
| Example 23 | Tb(thd)₃, 0.20 g | - | - | 97.4 |
| Example 24 | Tb(thd)₃, 0.020 g | - | Gold nanoparticles (10 nm), 0.01 g | 96.0 |

All the materials used in Examples were as follows.

As a polysilazane solution, a perhydropolysilazane polymer solution (DNF, Product No.: DNFMJ11) having 20 wt% of perhydropolysilazane having a molecular weight of 6,000 to 8,000 dissolved in dibutylether was used.

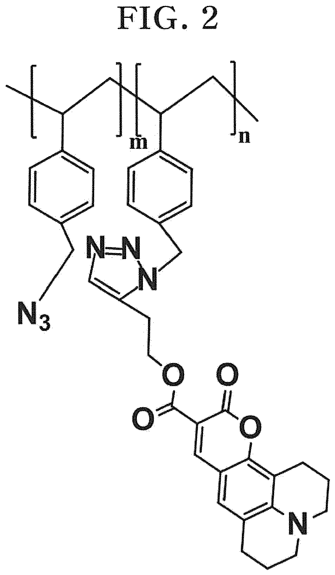

As an organic luminous body, Coumarin 6 (Aldrich, Product No.: 442631) and Rhodamine 6G (Aldrich, Product No.: 83697) were purchased and then used. As a poly coumarin, polymers having a chemical structure illustrated in FIG. 2 were directly prepared and then used.

As a semiconductor nanocrystal (or quantum dot), CdSe nanoparticles (Nanosquare) was purchased, and then used.

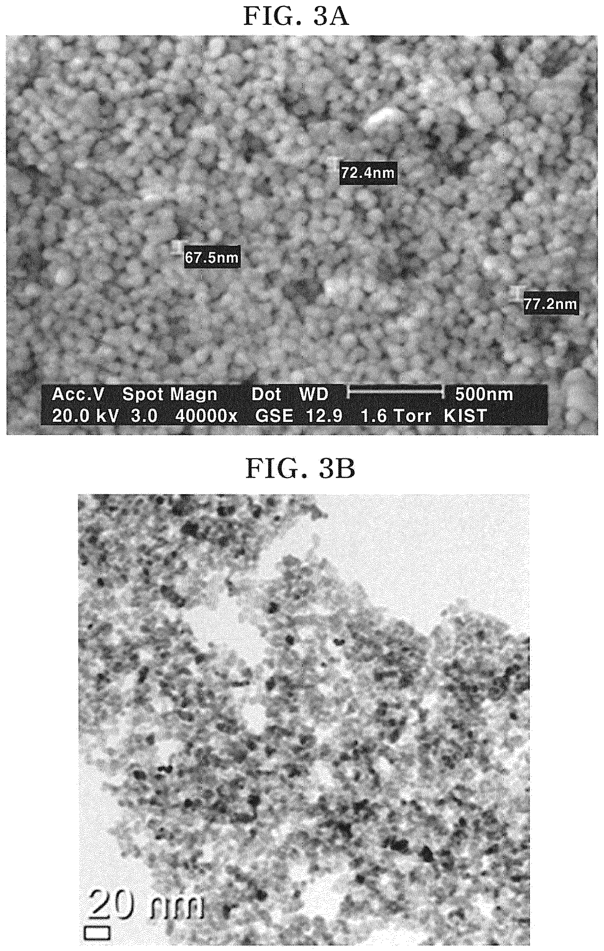

As an inorganic nano fluorescent substance powder, Y₂O₃:Tb, Yb nanopowders (an average particle size of 70 nm) and ZnO nanopowders (an average particle size of 10 nm) were directly prepared, dispersed in hexane, and then used (Y₂O₃:Tb, Yb means that Tb and Yb are doped on Y₂O₃). The scanning electron microscopy and transmission electron microscopy of the respective powders are illustrated in FIGS. 3A and 3B.

As a source of terbium ion (Tb³⁺), terbium (III) tris(2,2,6,6-tetramethyl-3,5-heptanedionate (Aldrich, Product No.: 434051, hereinafter, referred to as "Tb (thd)₃"), and terbium (III) nitrate hydrate (Alfa Aesar, Product No.: 74103) were used. As a source of europium ion (Eu³⁺), tris(2,2,6,6-tetramethyl-3,5-heptanedionato)europium (III) (TCI, Product No.: T1265, hereinafter, referred to as "Eu(thd)₃") was used. As a source of yttrium ion (Y³⁺), yttrium (III) tris(isopropoxide) (Yⁱ(OPr)₃) (Aldrich) was used. As a source of cerium ion (Ce³⁺), cerium (III) tris(acetylacetonate) hydrate (Ce(C₅H₇O₂)₃ · xH₂O, Ce (acac)₃ · xH₂O) (Aldrich) was used. As a source of chrome ion (Cr³⁺), chromium (III) tris(acetylacetonate) (Cr(C₅H₇O₂)₃, Cr(acac)3) (Aldrich) was used. As a source of titanium ion (Ti⁴⁺), titanium (IV) buthoxide (Ti(OC₄H₉)₄, Ti(OBu)₄) (Aldrich) was used. As a source of zinc ion (Zn²⁺), acetylzinc (Zn(COOCH₃)₂, Zn(OAc)₂) (Aldrich) was used.

Hexane, dibutylether, chloroform, and toluene, which are products manufactured by DAEJUNG CHEMICALS & METLAS CO., LTD. and have a purity of 99% or more, were used.

As an additive, N,N'-trimethylenebis(1-methylpiperidine) (TMBP) and 3-aminopropyl (triethoxysilane) (APTES) were used.

As a metal particle additive, a gold nanoparticle colloid solution (Sigma, Product No.: G1527) having a particle size of 10 nm was purchased, the solvent was substituted by hexane, and then the solution thus obtained was used.

### Preparation of Wavelength Converting Thin Film

The edge of a glass substrate (Product manufactured by Knittel Glaser, a thickness of 1.0 mm) having a size of 1 cm x 1 cm was attached with a sticky tape (3M, Cat 122A). And then, 200 µl of a coating solution including Coumarin 6 of Example 1 among the coating solutions listed in Table 1 was dropped to the glass substrate, and then the coating solution was uniformly applied using a blade (manufactured by Dorco). The transparent thin film thus obtained was subjected to a heating at an oven of 95°C for 2 hours to prepare the transparent thin film, in which a first curing was completed. At this time, in order to catalyze the curing, relative humidity was maintained to be 90% or more by adding together a dish including distilled water in the oven. The transparent thin film that was firstly cured was subject to a heating at an oven of 150°C for 2 hours to prepare the transparent thin film that was secondly cured. For the curing process, as described above, the curing at a low temperature of 95°C and the curing at a high temperature of 150°C may be progressed in order or the curing at a low temperature may be progressed for a long period of time to induce a complete curing. However, when the curing is progressed at a high temperature of 150°C from the beginning, cracks may occur on a thin film due to a rapid modification of polysilazane.

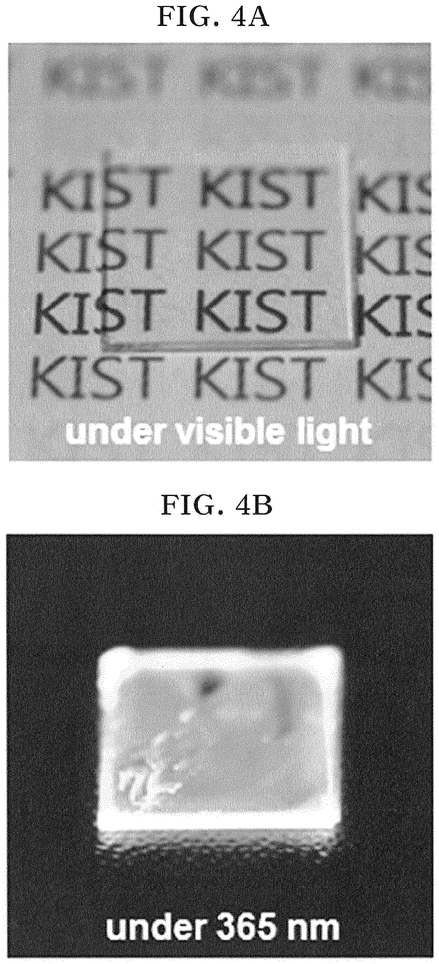

All of the prepared thin films were transparent, and as a typical example among them, the photographs of the thin film prepared with the coating solution in Example 23 under visible rays and ultraviolet rays (UV lamp (manufactured by VilerberLourmat), 365 nm) are illustrated in FIG. 4 (FIG. 4A: under visible rays, FIG 4B: under ultraviolet rays of 365 nm wavelength).

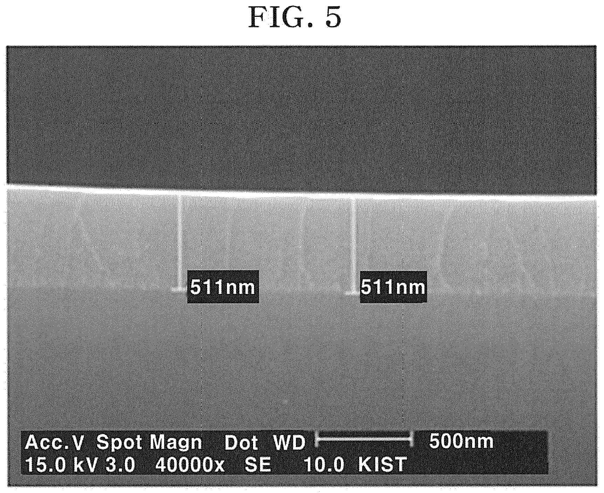

In addition, the cross section of the same thin film was observed with a scanning electron microscope (SEM, manufactured by FEI, Model Name: XL-30 EFG), and then the results are illustrated in FIG. 5.

### Comparative Example 1

### Preparation of Silica (FEOS) Coating Solution including Wavelength Converting Agent

To a dried glass container with a cover, 0.0005 g of Coumarin 6 was added, and 3.0 g of an ethanol solution and 0.8 g of an undiluted solution of TEOS (tetraethyl orthosilicate) (Aldrich, Product No.: 131903) were mixed to form a homogenized solution, and then 0.2 g of distilled water was added. The mixed solution was stirred in a water bath of 80°C for 3 hours to prepare a silica-based coating solution.

### Preparation of Silica Thin Film

The edge of a glass substrate (Product manufactured by Knittel Glaser) having a size of 1 cm x 1 cm x 1.0 mm was attached with a sticky tape (3M, Cat. No.: 122A). And then, 200 µl of the TEOS coating solution was dropped to the glass substrate, and then the coating solution was uniformly applied using a blade (manufactured by Dorco). The transparent thin film thus obtained was subjected to a heating at an oven of 95°C for 24 hours to prepare a cured thin film.

### Comparative Example 2

### Preparation of Silicon-based Polymer (PDMS) Coating Solution including Wavelength Converting Agent

To a dried glass container with a cover, an undiluted solution of a PDMS coating solution (polydimethylsiloxane) (Sylgard 184 manufactured by Dow Corning) and a curable solution were mixed in a weight ratio of 10:1, and then the mixture thus obtained was added. A tetrahydrofuran solvent was added to dilute the mixture to be a 20 wt% solution. 0.0005 g of Coumarin 6 was added to 4.0 g of the mixed solution, and sonicated in an ultrasonic wave water bath until it was dissolved to prepare a silicon-based polymer coating solution including Coumarin 6.

### Preparation of Polymer (PDMS) Thin Film

The edge of a glass substrate (Product manufactured by Knittel Glaser, a thickness of 1.0 mm) having a size of 1 cm x 1 cm was attached with a sticky tape (3M, Cat 122A). And then, 200 µl of the PDMS coating solution was dropped to the glass substrate, and then the coating solution was uniformly applied using a blade (manufactured by Dorco). The transparent thin film thus obtained was subjected to a heating at an oven of 95°C for 24 hours to prepare a cured polymer wavelength converting thin film.

### Comparative Example 3

### Preparation of Polysilazane Coating Solution including YAG Yellow Fluorescent Substance

A YAG:Ce yellow fluorescent substance (DAEJOO ELECTRONIC MATERIALS CO., LTD., Product No.: DLP-1217WY) was added to the perhydropolysilazane polymer solution used in Example 1, and then a coating solution was prepared as follows. To a glass container, 0.8 g of the perhydropolysilazane solution and 3.2 g of dibutylether were added, and then 0.01 g of the YAG:Ce yellow fluorescent substance powder was added. The mixed solution thus obtained was sonicated in an ultrasonic wave water bath to prepare a coating solution.

### Preparation of YAG Polysilazane Thin Film

The edge of a glass substrate (Product manufactured by Knittel Glaser, a thickness of 1.0 mm) having a size of 1 cm x 1 cm was attached with a sticky tape (3M, Cat 122A). And then, 200 µl of the YAG:Ce coating solution was dropped to the glass substrate, and then the coating solution was uniformly applied using a blade (manufactured by Dorco). The transparent thin film thus obtained was cured through the first curing and second curing like Example 1 to prepare a thin film.

### [Evaluation of Properties of Coating Solution]

### <Hydrogen Nuclear Magnetic Resonance (H-NMR) Spectrum of Coating Solution>

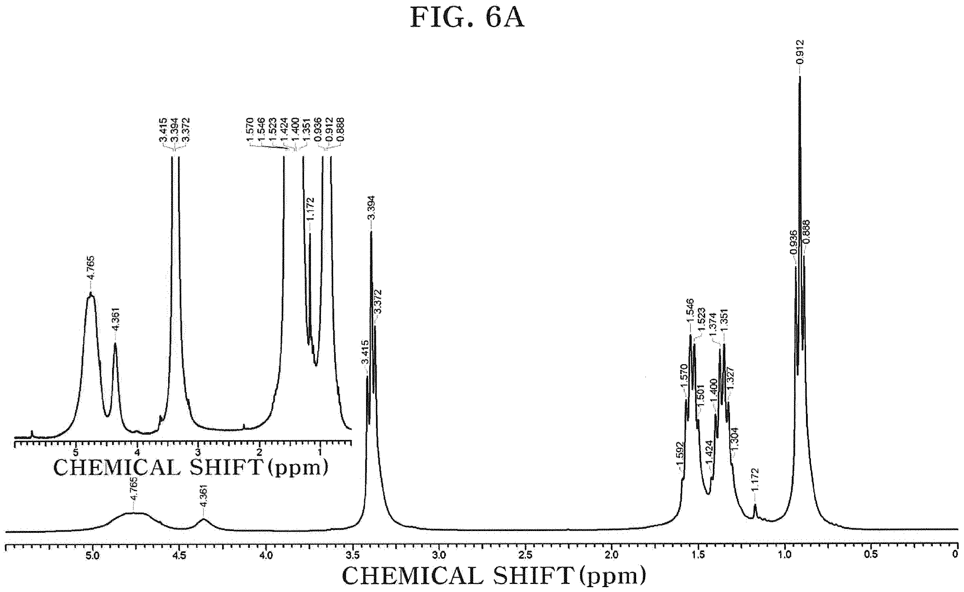

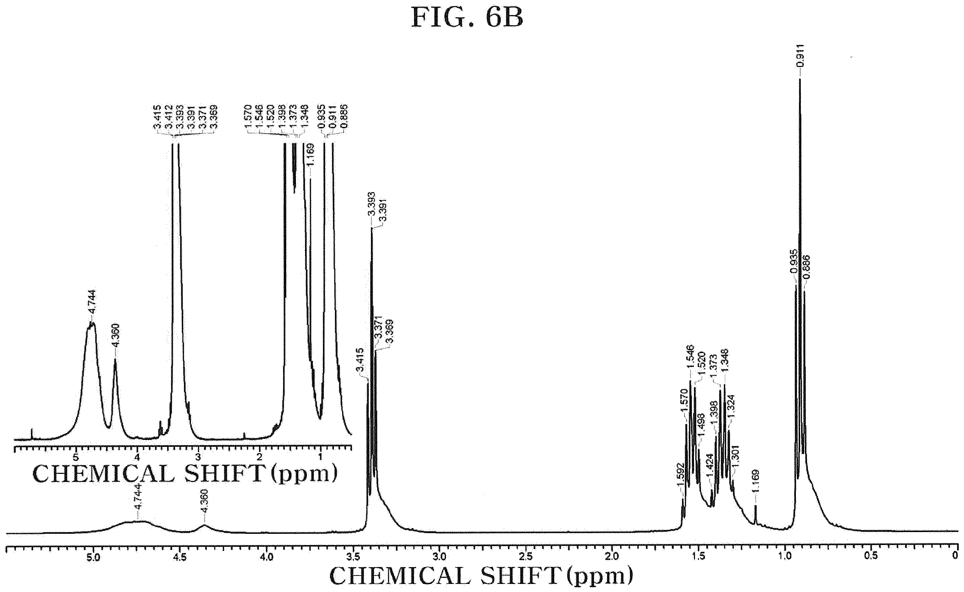

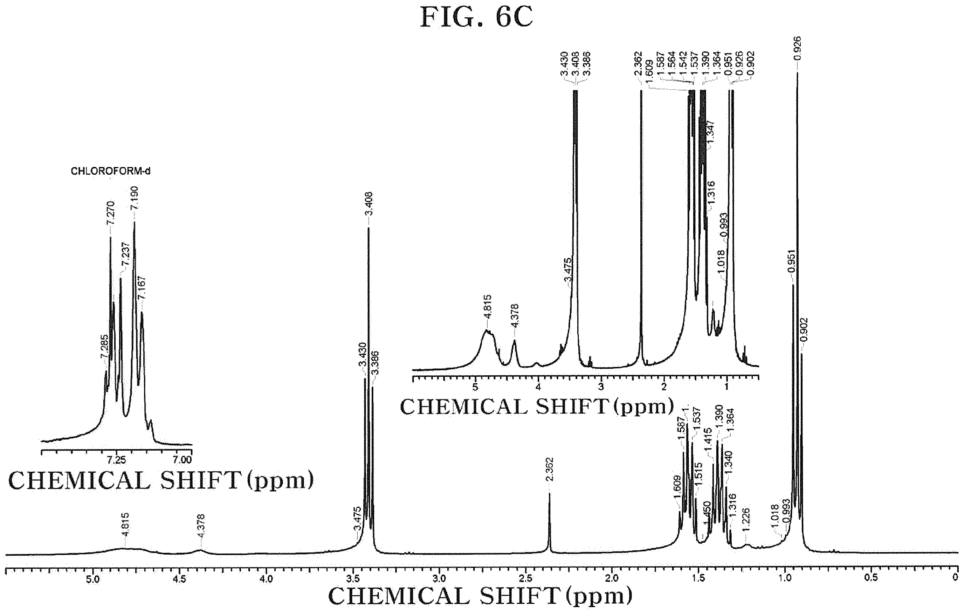

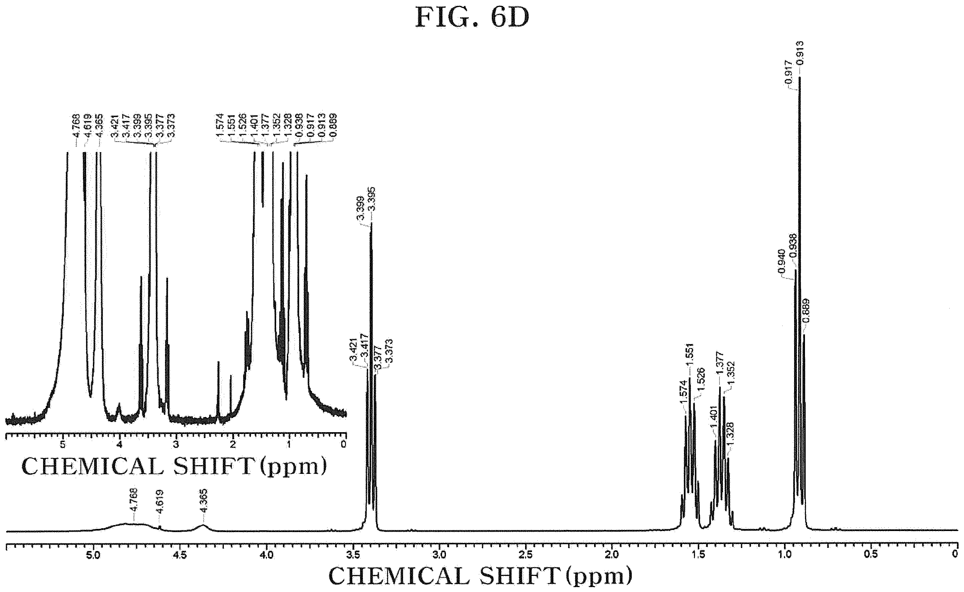

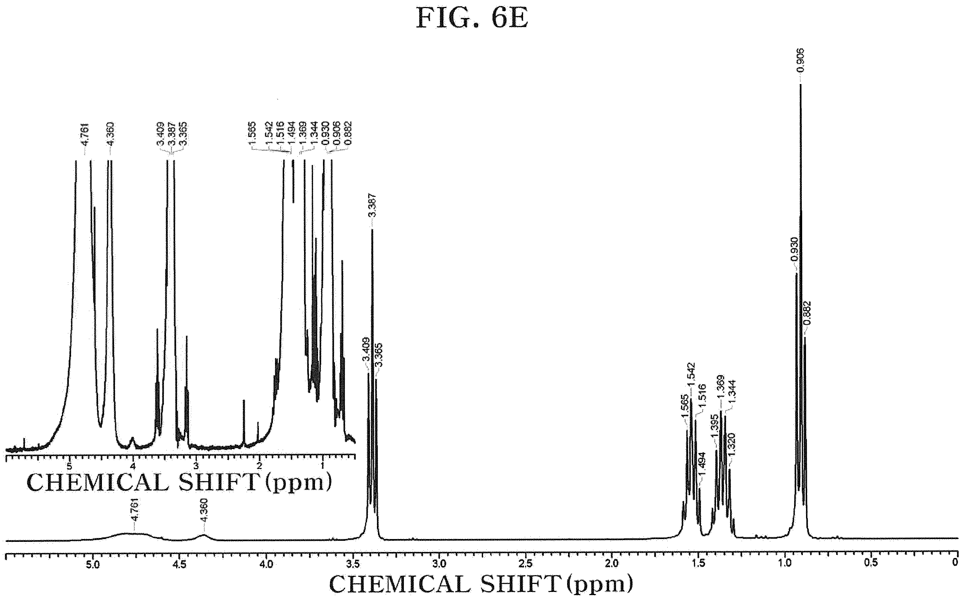

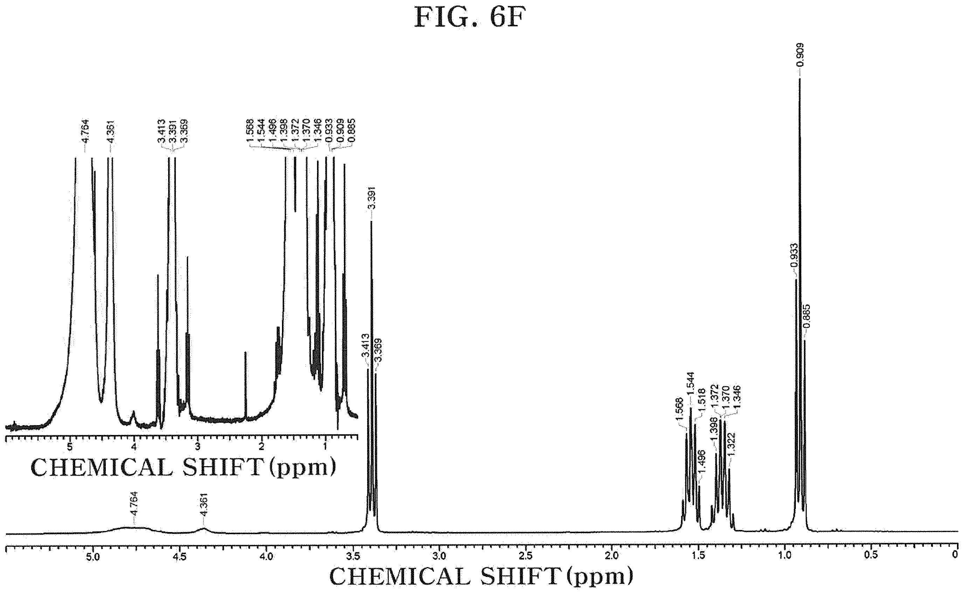

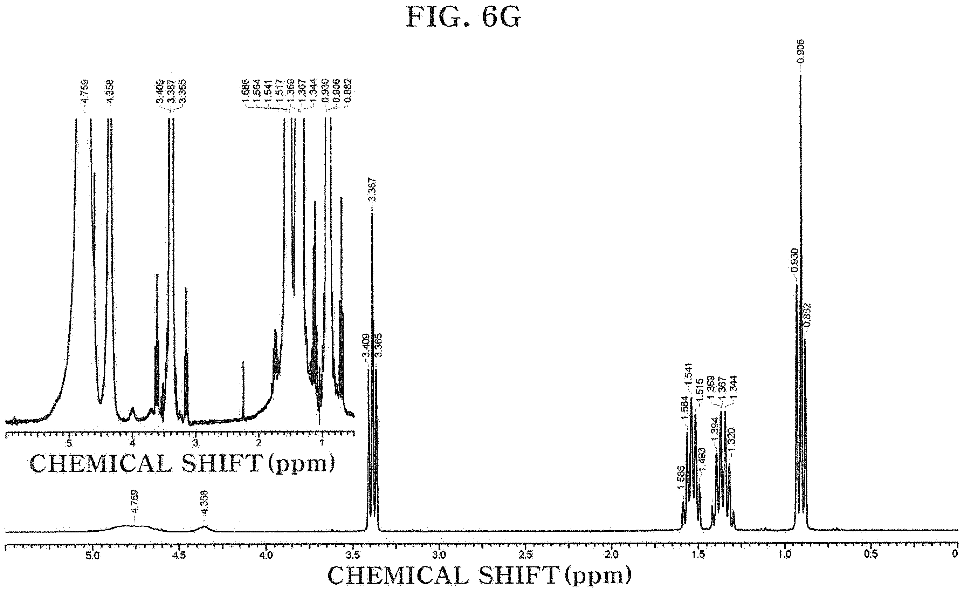

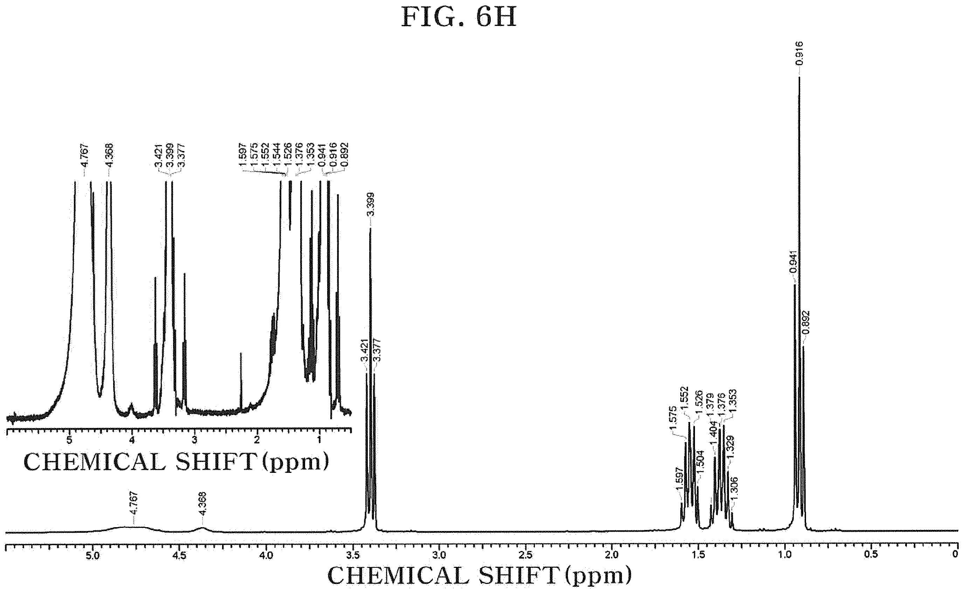

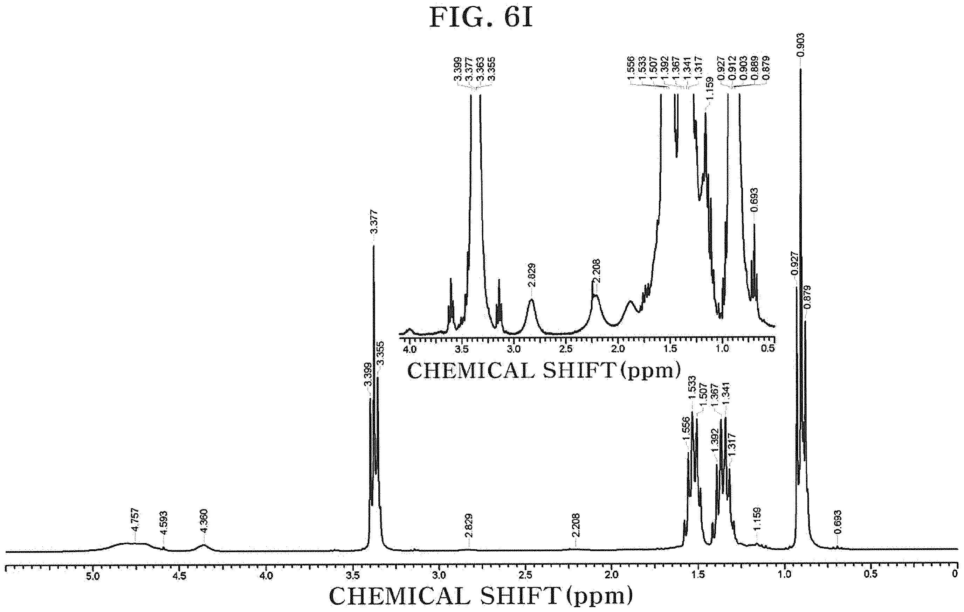

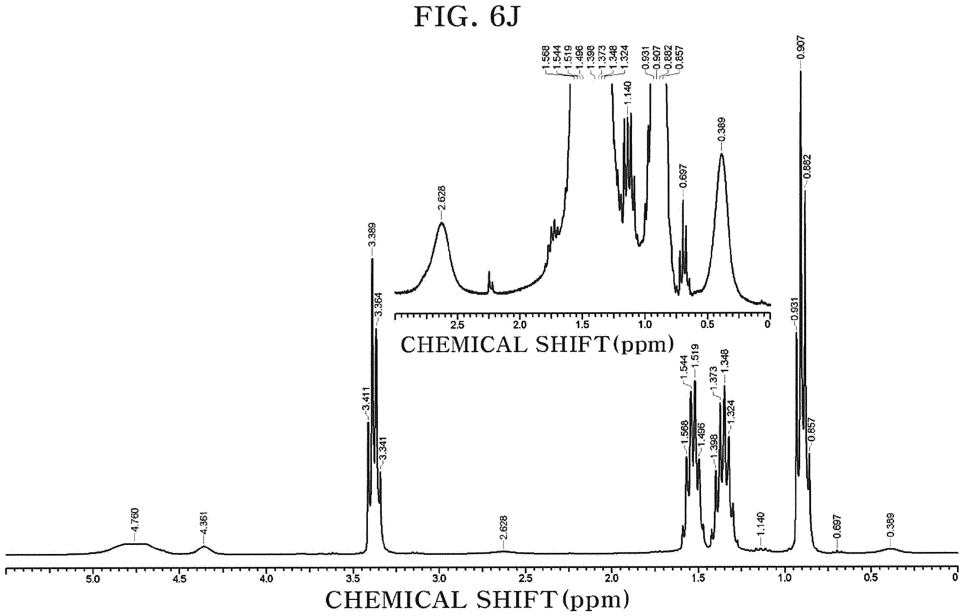

In order to confirm mixture properties of the coating solution, 50 µl of a coating solution was mixed with a CDCl₃ (99.80% D) NMR solvent (0.4 ml, Euriso top), and then a hydrogen nuclear magnetic resonance (H-NMR) spectrum analysis was performed by using a 300 MHz Bruker NMR apparatus. The results of analyzing the coating solutions of Examples 10, 12, 14, 15, 16, 17, 18, 19, 21, and 22 are illustrated in FIG. 6 in order (FIGS. 6A to 6J). Referring to FIG. 6, it can be confirmed that a hydrogen spectrum corresponding to the perhydropolysilazane and a hydrogen spectrum corresponding each of the wavelength converting agent are overlapped between 0.5 ppm and 5.0 ppm.

### <Photoluminescence Spectrum of Coating Solution>

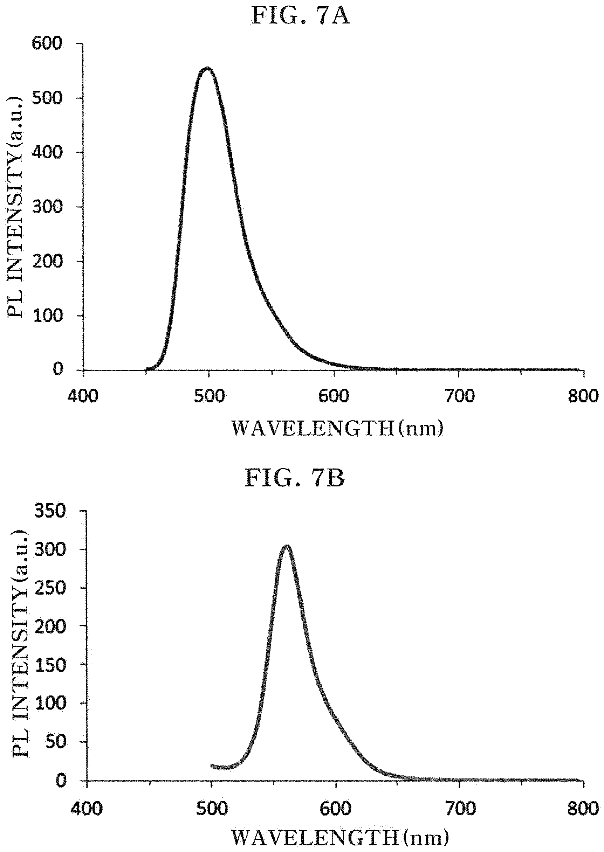

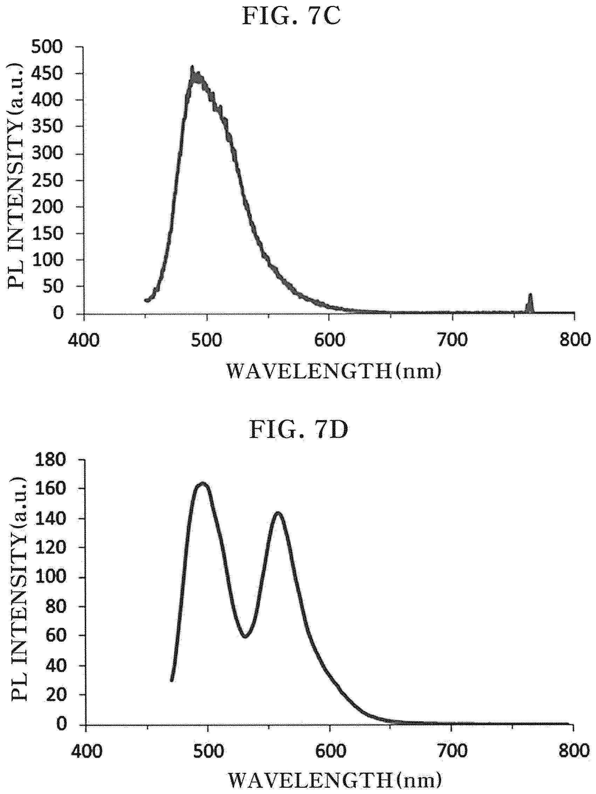

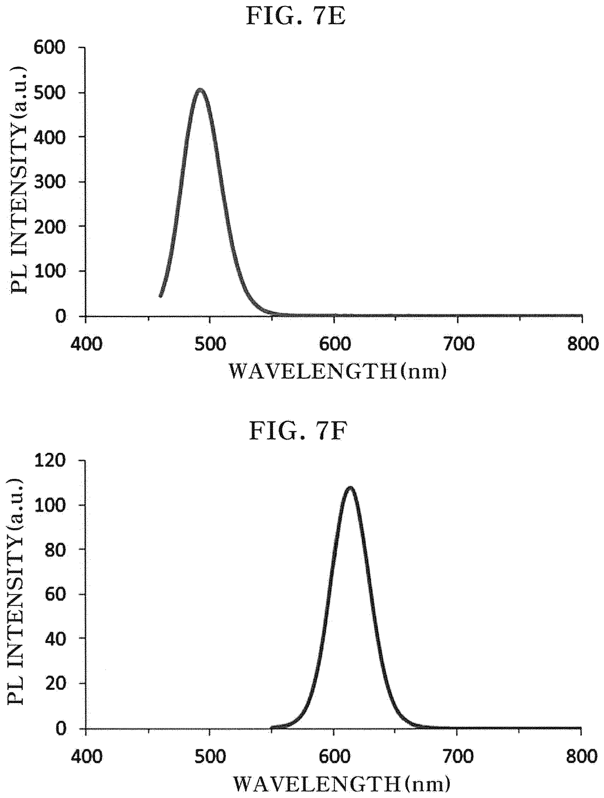

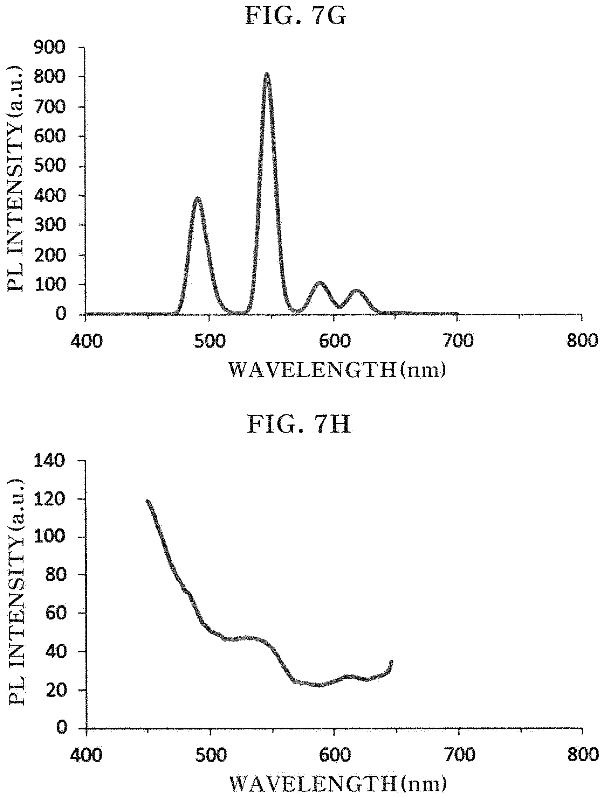

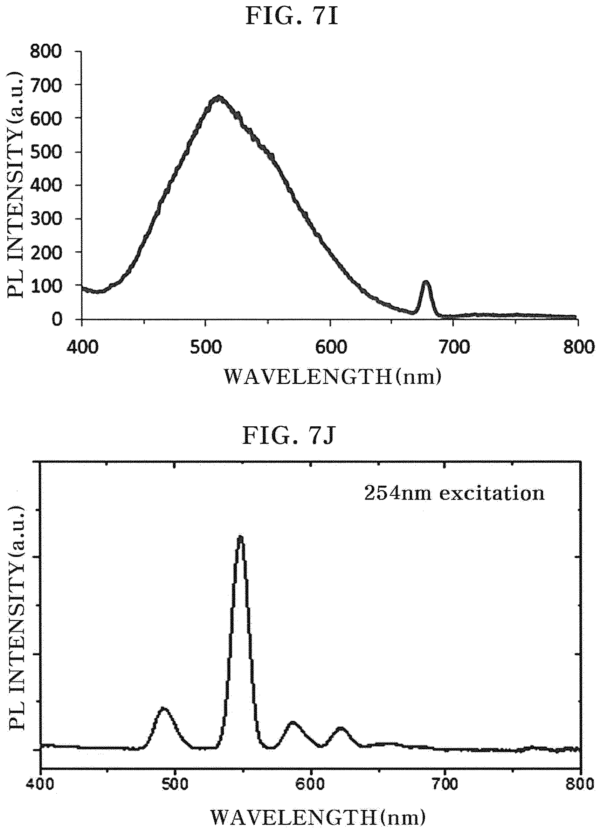

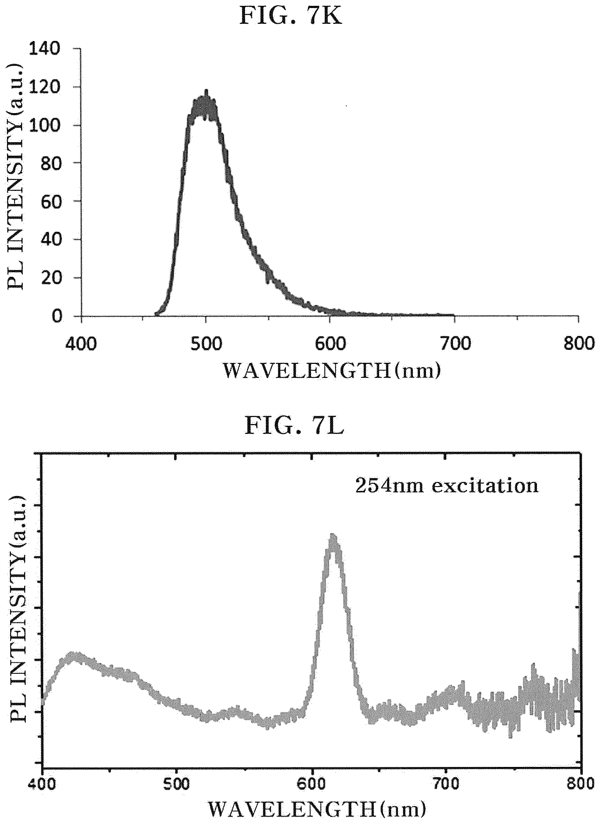

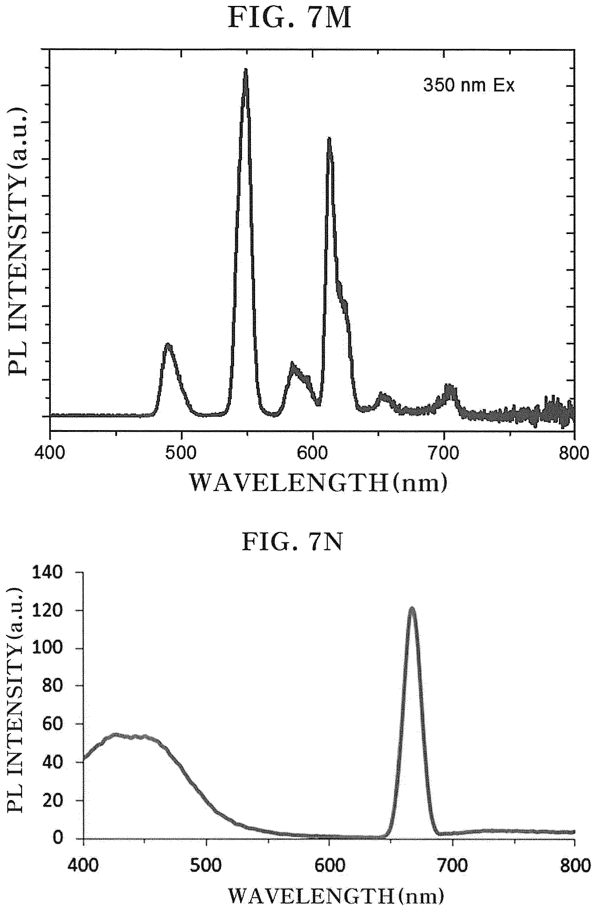

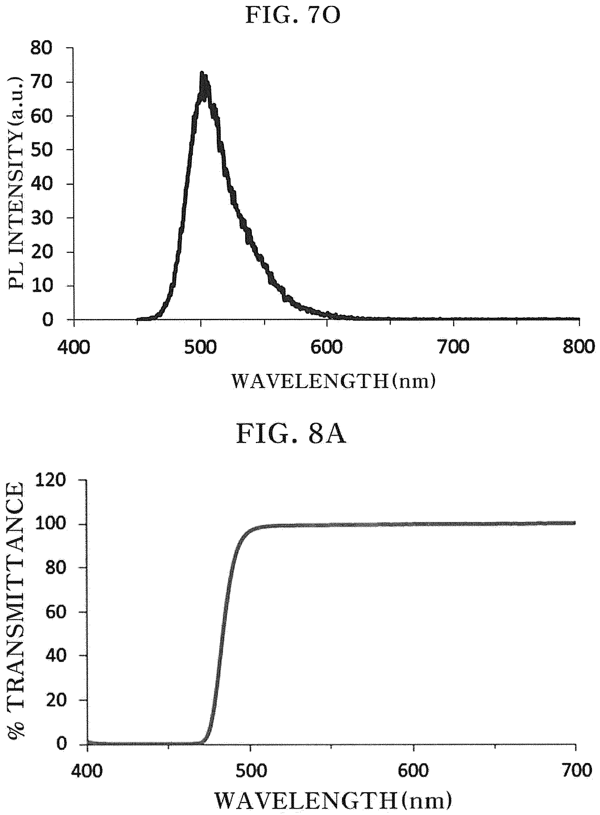

In order to confirm photoluminescence properties of the coating solution, the coating solution was added to a quartz cell of 10 mm x 10 mm, and then a photoluminescence spectrum analysis was performed by using a photoluminescence spectroscope (manufactured by Perkin Elmer, Model Name: LS50B). The results of analyzing the coating solutions of Examples 1 to 13, 17, and 24 are illustrated in FIG. 7 in order (FIGS. 7A to 7O). At this time, as a light source, excitation light source having the area of 350 to 480 nm was used. From these results, it can be confirmed that the luminescence spectrum is differently obtained according to the luminescence properties of the wavelength converting agents included.

### <Transmittance of Coating Solution>

In order to analyze the transmittance of the coating solution, the coating solution was added to a quartz cell of 10 mm x 10 mm, and then transmission spectrum analysis was performed at the area of 500 to 700 nm by using an UV-Vis spectroscope (manufactured by Varian, Model Name: Cary 100). The results of light transmittance of the coating solutions are listed in Table 1. The transmission ratio is represented as a relative value on the basis of an aqueous solution (100% of transmission ratio). Referring to Table 1, it can be confirmed that all the coating solutions according to Examples of the present invention have the transmittance of 90% or more at the visible area of 500 to 700 nm.

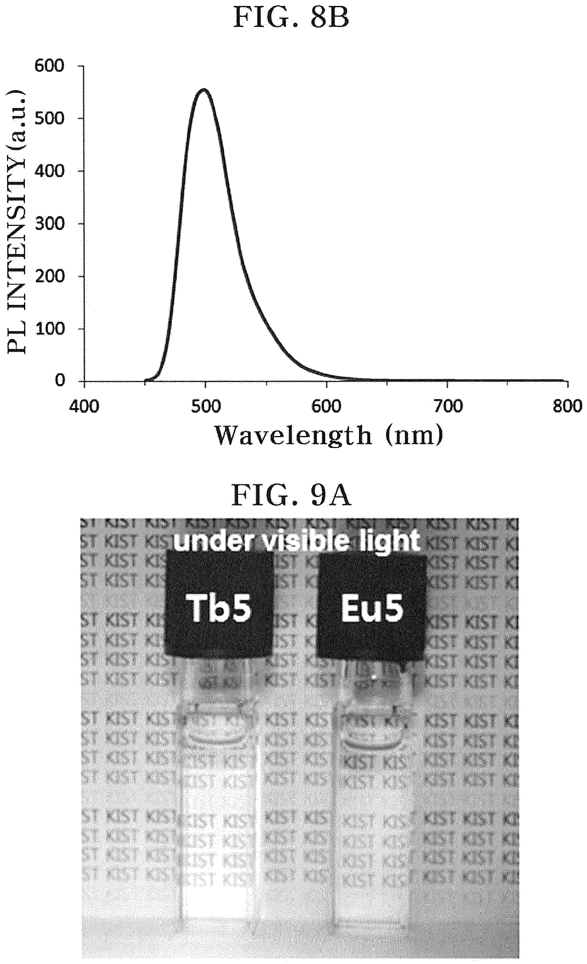

Representatively, the results of measuring the photoluminescence properties and light transmittance of the coating solution in Example 1 are illustrated in FIG. 8 (FIG. 8A: light transmittance, FIG. 8B: photoluminescence).

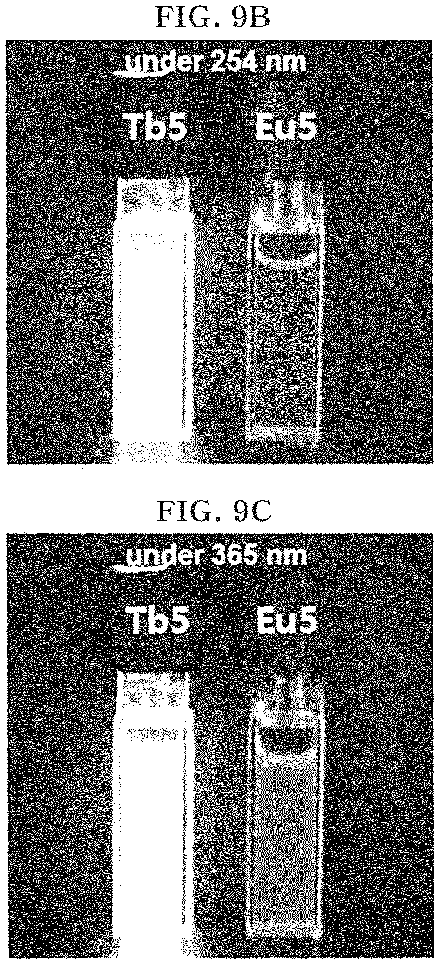

Representatively, the photographs illustrating photoluminescence properties of the coating solutions in Examples 10 and 12 under visible rays and ultraviolet rays are illustrated in FIG. 9 (FIG. 9A: under visible rays, FIG 9B: under ultraviolet rays of 254 nm, FIG. 9C: under ultraviolet rays of 365 nm). The left specimens in the respective photographs are about the coating solution of Example 10 and the right specimens in the respective photographs are about the coating solution of Example 12.

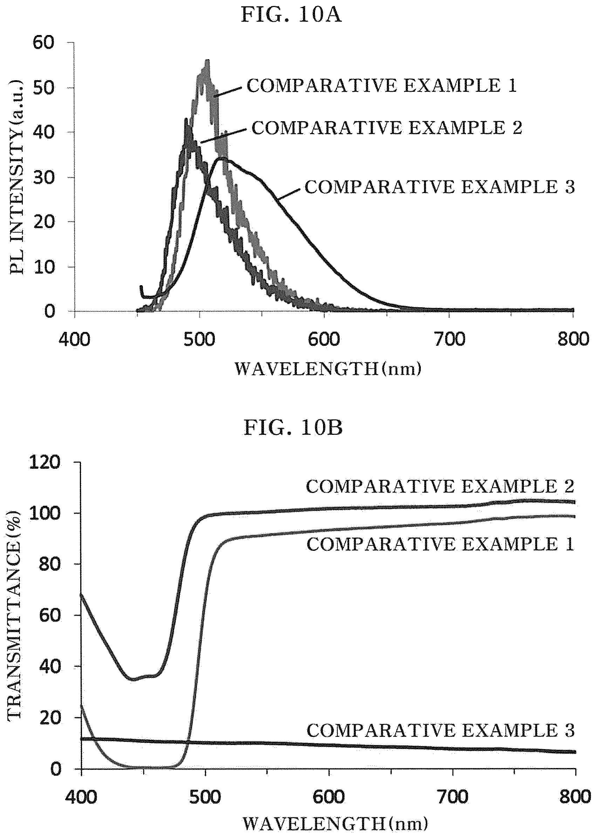

The results of measuring the photoluminescence properties and light transmittances of the coating solutions in Comparative Examples 1 to 3 are illustrated in FIG. 10 (FIG. 10A: photoluminescence properties, FIG. 10B: light transmittances). The coating solutions of Comparative Examples 1 and 2 exhibits high light transmittance, but the coating solution of Comparative Example 3 is opaque, and its light transmittance was measured in 10% or less.

### [Evaluation of Properties of Thin Film]

### <Transmittance of Thin Film>

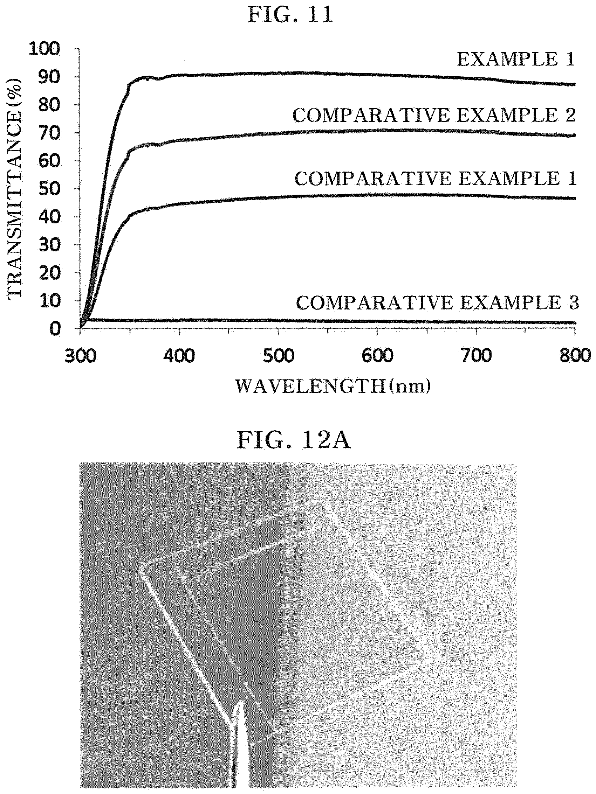

The transmittances of the thin films according to Examples 1, and Comparative Examples 1 to 3 were measured by using an UV-Vis spectroscope (Model Name: Cary 100 manufactured by Varian), and then the results thus obtained are compared and then illustrated in FIG. 11. Referring to FIG. 11, it can be confirmed that the thin film of Example 1 exhibits the transmittance of about 90% or more with respect to air; the silica-based thin film of Comparative Example 1 exhibits the transmittance of about 46% with respect to air; the polymer (PDMS) thin film of Comparative Example 2 exhibits the transmittance of about 70% with respect to air; and the YAG:Ce thin film of Comparative Example 3 exhibits the transmittance of 0% with respect to air.

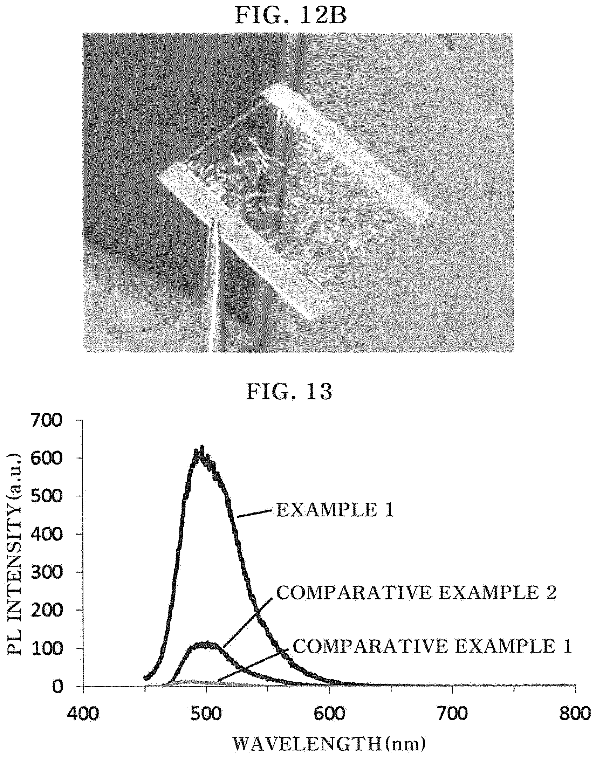

The photographs of the thin film of Example 1 and thin film of Comparative Example 2 are illustrated in FIG. 12 (Example 1: FIG. 12A, Comparative Example 2: FIG. 12B). Referring to FIG. 12, it can be confirmed that in case of the silica-based thin film of Comparative Example 2, serious cracks and delamination occur due to the volumetric shrinkage of 50% or more during the curing of the applied thin film, and thus the transmittances are decreased.

### <Photoluminescence Properties of Thin Film>

The photoluminescence properties of the thin film of Example 1 and thin films of Comparative Examples 1 and 2 are illustrated in FIG. 13. Referring to FIG. 13, it can be confirmed that the thin film of Example 1 has excellent photoluminescence properties, which are about 6 times better as compared with Comparative Example 1 and about 50 times better as compared with Comparative Example 2.

### <Photobleaching Properties of Thin Film>

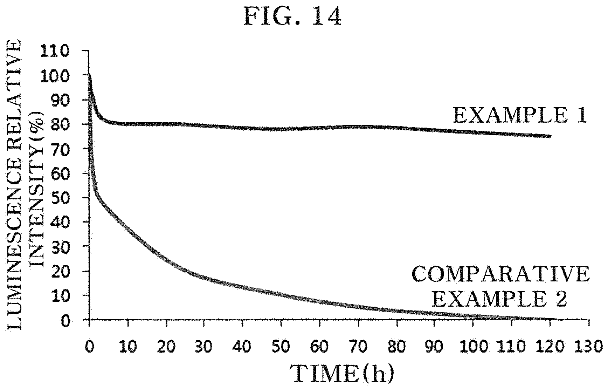

The photobleaching properties were evaluated by observing the modifications of the photoluminescence spectrums of the thin film of Example 1 and thin film of Comparative Example 2 after being exposed to visible rays (since the thin film of Comparative Example 1 has serious cracks and a delamination phenomenon as illustrated in FIG. 12, it is difficult to evaluate the photobleaching properties thereof). The respective wavelength converting thin films were placed in a reactor installed with a metal-halogen lamp (a wavelength of 380 to 700 nm), and then exposed to visible rays. The respective thin films were placed under the lamp at 20 cm from the lamp, and then the temperature of the reactor was maintained at 35°C. As time passed, the luminescence intensities at 493 nm corresponding to λₘₐₓ were measured. The results thus obtained are illustrated in FIG 14. Referring to FIG. 14, it can be confirmed that the thin film of Example 1 has almost no photobleaching, but in case of the thin film of Comparative Example 2, the photobleaching is continuously generated as time goes by, and thus there is almost no luminescence phenomenon after about 100 hours. In case of Comparative Example 1, since the cracks were generated on the thin film, the photobleaching was not measured.

The terms used in the present invention are only for describing specific Examples, but the present invention is not limited thereto. It is considered that the singular expression includes plural meaning, if the singular expression is not obvious in the content. The terms "including" or "having" means there are properties, numbers, steps, action, components, or a combination thereof described in the specification, but the terms do not mean without them. The present invention is not limited to the above described embodiments and attached drawings, but is limited by the claims. Therefore, various types of substitutions, modifications, and changes may be performed by those who skilled in the art in the range of the technique idea of the present invention described in the claims, and may be also included in the scope of the present invention.

The coating composition according to the present invention exhibits high visible light transmittance and is easily applied on a surface of a substrate material.

In addition, the coating composition according to the present invention may form a transparent curing body (thin film, sheet, or encapsulant) of high density by applying the coating composition and then curing it through applying an external stimulus such as water, a high temperature, catalysis, and light.

In addition, the present invention can implement a transparent thin film having excellent wear resistance, heat resistance, chemical resistance, oxidation resistance, and the like because polysilazane is used.

## Claims

1. A coating composition comprising a solvent, polysilazane, and a wavelength converting agent, the coating composition exhibiting visible light transmittance of 50% or more with respect to an aqueous solution, when, in order to analyze the transmittance of the coating solution, the coating solution is added to a quartz cell of 10 mm x 10 mm, and then, the transmission spectrum analysis of the coating solution is performed at an area of 500 to 700 nm by using an UV-Vis spectroscope and the transmission ratio is represented as a relative value on the basis of an aqueous solution (100 % of transmission ratio), wherein the wavelength converting agent is at least one selected from a group consisting lanthanide-based compound dissolved in a concentration of solubility or less, a transition-metal compound dissolved in a concentration of solubility or less, organic luminous body dissolved in a concentration of solubility or less, a semiconductor nanocrystal having a particle size of 2 to 40 nm and inorganic nano fluorescent substance powders having a particle size of 100 nm or less,
wherein the inorganic nano fluorescent substance powders is at least one selected from a group consisting (AE)Ga₂S₄:Eu²⁺, (AE)S:Eu²⁺, (AE)M₂O₄:Eu²⁺ (AE, alkali earth metal, is at least one of Ba, Ca, and Sr, and M is at least one of Si and Ge), LaPO₄:Eu, LaVO₄:Eu, NaYF₄:Er, Yb, ZnO, Y₂O₃:Eu (and/or Tb), CaSiAlN₃ and SrSN₂.

2. The coating composition of claim 1, wherein the polysilazane is represented by the following Chemical Formula 1: 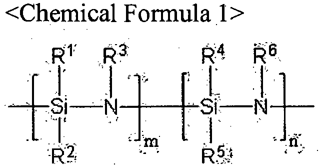 (in Chemical Formula 1,
m and n are an integer of 1 to 500;
R¹, R², R⁴, and R⁵ are hydrogen, methyl, vinyl, or phenyl, respectively, and are the same or different from each other; and
R³ and R⁶ are hydrogen, trimethylsilyl, or alkoxysilylpropyl, and are the same or different from each other)

3. The coating composition of claim 1, wherein a content of the polysilazane is 1 to 99 vol% with respect to the total composition.

4. The coating composition of claim 1, wherein the lanthanide-based compound and transition-metal compound include a nitrate-based, carbonate-based, halogen-based, sulfate-based, oxidation-based, phosphate-based, acetate, acetoacetyl, or coordinated organic compound-based compound.

5. The coating composition of claim 1, wherein the organic luminous body includes at least one selected from the group consisting of organic monomers including aromatic, alicyclic, ether, halogenated hydrocarbon, or terpene functional groups, and polymers thereof.

6. The coating composition of claim 1, wherein the semiconductor nanocrystal includes at least one selected from the group consisting of CdTe/CdSe, CdS(Se)/CdTe, CdS(Se)/ZnTe, CuInS(Se)/ZnS(Se), Cu(GaIn)S(Se)/ZnS(Se), ZnTe/CdS(Se), GaSb/GaAs, GaAs/GaSb, Ge/Si, Si/Ge, PbSe/PbTe, PbTe/PbSe, CdTe, CdSe, ZnTe, CuInS, CuGaS, Cu(Ga,In)S, CuGaSnS(Se), CuGaS(Se), CuSnS(Se), ZnS, CuInSe, CuGaSe, ZnSe, ZnTe, GaSb, GaAs, Ge, Si, PbSe, PbTe, PbTe, and PbSe.

7. The coating composition of claim 1, wherein a content of the wavelength converting agent is 0.0001 to 50 wt% with respect to the polysilazane weight.

8. The coating composition of claim 1, wherein the solvent is one of a petroleum solvent, an aromatic solvent, an alicyclic solvent, ether, halogenated hydrocarbon, and a terpene mixture, and a combination thereof.

9. The coating composition of claim 1, further comprising a curable catalyst, a binding agent, and metal particles,
wherein a total content of the curable catalyst, the binding agent, and the metal particles is 0.0001 to 10 wt% with respect to the total coating composition.

10. A thin film being prepared by applying the coating composition of claim 1 on a substrate and then curing.

11. The thin film of claim 10, wherein the substrate includes any one of a plastic, a stainless steel, a glass, quartz, a solar cell, an LED chip, and a fiber.

12. The thin film of claim 10, wherein visible light transmittance is 50% or more with respect to air, when, in order to analyze the transmittance of the thin film, the transmittance is measured by an UV-Vis spectroscope at an area of 400 to 700 nm.

13. The thin film of claim 10 further comprising a polysilazane protecting layer.

14. The thin film of claim 10 wherein the curing is performed by using one or more methods of heating, illumination, a room temperature arrangement, a water injection, and a catalyst injection.

## Patentansprüche

1. Beschichtungszusammensetzung, umfassend ein Lösungsmittel, ein Polysilazan und ein Wellenlängenumwandlungsmittel, wobei die Beschichtungszusammensetzung eine Durchlässigkeit für sichtbares Licht von 50 % oder mehr hinsichtlich einer wässrigen Lösung aufweist, wenn die Beschichtungslösung zum Analysieren der Durchlässigkeit der Beschichtungslösung in eine 10 mm x 10 mm große Quartzküvette hinzugefügt ist und anschließend die Durchlässigkeitsspektralanalyse der Beschichtungslösung in einem Bereich von 500 bis 700 nm mittels eines UV/VIS-Spektroskops ausgeführt ist und der Durchlassgrad als ein Relativwert basierend auf eine wässrige Lösung (Durchlassgrad von 100 %) dargestellt ist, wobei das Wellenlängenumwandlungsmittel aus mindestens einer Verbindung aus der folgenden Gruppe von Verbindungen wählbar ist: eine Verbindung auf Lanthanoidbasis, welche in einer Konzentration der Löslichkeit oder niedriger gelöst ist, eine Übergangsmetallverbindung, welche in einer Konzentration der Löslichkeit oder niedriger gelöst ist, ein organischer Leuchtkörper, welcher in einer Konzentration der Löslichkeit oder niedriger gelöst ist, ein Halbleiternanokristall mit einer Partikelgröße von 2 bis 40 nm und anorganische fluoreszierende Nanoleuchtstoffpulver mit einer Partikelgröße von 100 nm oder geringer,
wobei die anorganischen fluoreszierenden Nanoleuchtstoffpulver aus mindestens einer der folgenden Gruppe von Verbindungen wählbar ist: (AE)Ga₂S₄:Eu²⁺, (AE)S:Eu²⁺, (AE)M₂O₄:Eu²⁺ (AE, Erdalkalimetall, ist mindestens eines der folgenden Elemente: Ba, Ca und Sr; und M ist mindestens eines der folgenden Elemente: Si und Ge), LaPO₄:Eu, LaVO₄:Eu, NaYF₄:Er, Yb, ZnO, Y₂O₃:Eu (und/oder Tb), CaSiAIN₃ und SrSN₂.

2. Beschichtungszusammensetzung nach Anspruch 1, wobei das Polysilazan in der folgenden chemischen Formel 1 dargestellt ist: 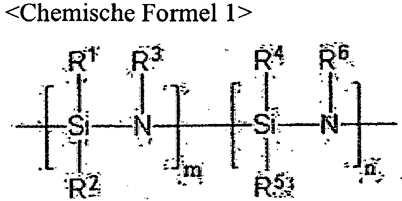 (In der chemischen Formel 1
sind m und n eine ganze Zahl von 1 bis 500;
sind R¹, R², R⁴ und R⁵ jeweils Wasserstoff, Methyl, Vinyl oder Phenyl und sind gleich oder unterschiedlich; und
sind R³ und R⁶ Wasserstoff, Trimethylsilyl oder Alkoxysilylpropyl und sind gleich oder unterschiedlich).

3. Beschichtungszusammensetzung nach Anspruch 1, wobei ein Gehalt des Polysilazans hinsichtlich der Gesamtzusammensetzung 1 bis 99 Vol.-% ist.

4. Beschichtungszusammensetzung nach Anspruch 1, wobei die Verbindung auf Lanthanoidbasis und die Übergangsmetallverbindung ein Acetat, ein Acetoacetyl oder eine Verbindung auf Basis einer koordinierten organischen Verbindung auf Nitratbasis, Carbonatbasis, Halogenbasis, Sulfatbasis, Oxidationsbasis oder Phosphatbasis umfasst.

5. Beschichtungszusammensetzung nach Anspruch 1, wobei der organische Leuchtkörper aus mindestens einem organischen Monomer der folgenden Gruppe wählbar ist: aromatisches Monomer, alicyclisches Monomer, Ether, halogenierter Kohlenwasserstoff oder Terpen-Funktionsgruppen und deren Polymere.

6. Beschichtungszusammensetzung nach Anspruch 1, wobei der Halbleiternanokristall mindestens eines ausgewählt aus der folgenden Gruppe umfasst:
CdTe/CdSe, CdS(Se)/CdTe, CdS(Se)/ZnTe, CuInS(Se)/ZnS(Se), Cu(GaIn)S(Se)/ZnS(Se), ZnTe/CdS(Se), GaSb/GaAs, GaAs/GaSb, Ge/Si, Si/Ge, PbSe/PbTe, PbTe/PbSe, CdTe, CdSe, ZnTe, CuInS, CuGaS, Cu(Ga,In)S, CuGaSnS(Se), CuGaS(Se), CuSnS(Se), ZnS, CuInSe, CuGaSe, ZnSe, ZnTe, GaSb, GaAs, Ge, Si, PbSe, PbTe, PbTe und PbSe.

7. Beschichtungszusammensetzung nach Anspruch 1, wobei ein Gehalt des Wellenlängenumwandlungsmittels hinsichtlich des Gewichts des Polysilazans 0,0001 bis 50 Gew.-% ist.

8. Beschichtungszusammensetzung nach Anspruch 1, wobei das Lösungsmittel eines aus einem Petroleumlösungsmittel, einem aromatischen Lösungsmittel, einem alicyclischen Lösungsmittel, Ether, halogeniertem Kohlenwasserstoff und einem Terpengemisch und einer Kombination daraus ist.

9. Beschichtungszusammensetzung nach Anspruch 1, weiterhin umfassend einen härtbaren Katalysator, ein Bindemittel und Metallpartikel,
wobei ein Gesamtgehalt des härtbaren Katalysators, des Bindemittels und der Metallpartikel hinsichtlich der gesamten Beschichtungszusammensetzung 0,0001 bis 10 Gew.-% ist.

10. Dünnschicht, welche durch Auftragen der Beschichtungszusammensetzung nach Anspruch 1 auf einem Substrat und anschließendem Härten bereitet ist.

11. Dünnschicht nach Anspruch 10, wobei das Substrat eines der Folgenden umfasst: einen Kunststoff, Edelstahl, Glas, Quarz, eine Solarzelle, einen LED-Chip und eine Faser.

12. Dünnschicht nach Anspruch 10, wobei die Durchlässigkeit von sichtbarem Licht hinsichtlich der Luft 50 % oder mehr ist, wenn die Durchlässigkeit zum Analysieren der Durchlässigkeit der Dünnschicht mittels eines UV/VIS-Spektroskops in einem Bereich von 400 bis 700 nm messbar ist.

13. Dünnschicht nach Anspruch 10, weiterhin umfassend eine Polysilazan-Schutzschicht.

14. Dünnschicht nach Anspruch 10, wobei das Härten mittels eines oder mehreren Verfahren der Erwärmung, der Illumination, einer Raumtemperaturanordnung, einer Wassereinspritzung und einer Katalysatoreinspritzung ausführbar ist.

## Revendications

1. Composition de revêtement comprenant un solvant, un polysilazane et un agent de conversion de longueur d'onde, ladite composition de revêtement ayant une transmittance de lumière visible de 50 % ou plus par rapport à une solution aqueuse quand la solution de revêtement est ajoutée à une cuve de quartz de
10 mm x 10 mm pour analyser la transmittance de la solution de revêtement et l'analyse spectrale de transmission de la solution de revêtement est ensuite exécutée dans un domaine de 500 à 700 nm en utilisant un spectroscope ultraviolet-visible et le rapport de transmission est représenté comme un valeur relatif en fonction de la solution aqueuse (100 % du rapport de transmission), dans laquelle l'agent de conversion de longueur d'onde est choisi au moins d'un groupe consistant d'un composé à base de lanthanide dissous dans une concentration d'une solubilité ou moins, d'un composé de métal de transition dissous dans une concentration d'une solubilité ou moins, un corps lumineux organique dissous dans une concentration d'une solubilité ou moins, un nanocristal semi-conducteur ayant une taille de particule de 2 à 40 nm et des poudres de nanosubstance fluorescente inorganique ayant une taille de particule de 100 nm ou moins,
dans lequel les poudres de nanosubstance fluorescente inorganique est choisies au moins d'un du groupe consistant de (AE)Ga₂S₄Eu²⁺, (AE)S :Eu²⁺, (AE)M₂O₄ :Eu²⁺, (AE, métal alcalino-terreux, est au moins un de Ba, Ca et Sr ; et M est au moins un de Si et Ge), LaPO₄ :Eu, LaVO₄ :Eu, NaYF₄ :Er, Yb, ZnO, Y₂O₃ :Eu (et/ou Tb), CaSiAIN₃ et SrSN₂.

2. Composition de revêtement selon la revendication 1, dans lequel le polysilazane est représenté par la formule chimique 1 suivante : 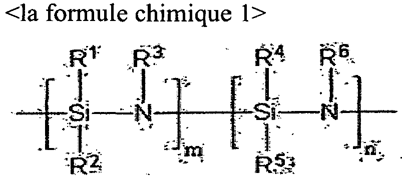 (Dans la formule chimique 1,
m et n sont des nombres entiers de 1 à 500 ;
R¹, R², R⁴ et R⁵ sont hydrogène, méthyl, vinyle ou phényle, respectivement, et sont les mêmes ou différents les uns des autres ; et
R³ et R⁶ sont hydrogène, triméthylsilyle ou alkoxysilylepropyle et sont les mêmes ou différents les uns des autres).

3. Composition de revêtement selon la revendication 1, dans laquelle un contenu du polysilazane est 1 à 99 % en volume par rapport à la composition totale.

4. Composition de revêtement selon la revendication 1, dans laquelle le composé à base de lanthanide et le composé de métal de transition comprennent un acétate, un acétoacétyle ou un composé à base de composé organique coordonné à base de nitrate, à base de carbonate, à base de halogène, à base de sulfate, à base d'oxydation ou à base de phosphate.

5. Composition de revêtement selon la revendication 1, dans laquelle le corps lumineux organique comprend au moins un du groupe suivant consistant du monomère organique comprenant : monomère aromatique, monomère alicyclique, éther, hydrocarbure halogéné ou des groupes fonctionnels de terpène et des polymères ceux-ci.

6. Composition de revêtement selon la revendication 1, dans laquelle le nanocristal semi-conducteur comprend au moins un du groupe suivants consistant de CdTe/CdSe, CdS(Se)/CdTe, CdS(Se)/ZnTe, CuInS(Se)/ZnS(Se), Cu(GaIn)S(Se)/ZnS(Se), ZnTe/CdS(Se), GaSb/GaAs, GaAs/GaSb, Ge/Si, Si/Ge, PbSe/PbTe, PbTe/PbSe, CdTe, CdSe, ZnTe, CuInS, CuGaS, Cu(Ga,In)S, CuGaSnS(Se), CuGaS(Se), CuSnS(Se), ZnS, CuInSe, CuGaSe, ZnSe, ZnTe, GaSb, GaAs, Ge, Si, PbSe, PbTe, PbTe und PbSe.

7. Composition de revêtement selon la revendication 1, dans laquelle un contenu de l'agent de conversion de longueur d'onde est 0,0001 à 50 % en poids par rapport au poids du polysilazane.

8. Composition de revêtement selon la revendication 1, dans laquelle le solvant est un du groupe consistant d'un solvant à base de pétrole, un solvant aromatique, un solvant alicyclique, éther, hydrocarbure halogéné et un mélange de terpènes et une combinaison ceux-ci.

9. Composition de revêtement selon la revendication 1, comprenant en outre un catalyseur durcissable, un liant et des particules métallique,
dans laquelle un contenu totale du catalyseur durcissable, du liant et des particules métalliques est 0,0001 à 10 % en poids par rapport à la composition de revêtement totale.

10. Couche mince étant préparée par appliquer la composition de revêtement selon la revendication 1 sur un substrat et ensuite par la durcir.

11. Couche mince selon la revendication 10, dans laquelle le substrat comprend l'un des suivants : plastiques, acier inoxydable, verre, quartz, une cellule solaire, une puce LED et une fibre.

12. Couche mince selon la revendication 10, dans laquelle la transmittance de lumière visible est 50 % ou plus par rapport à l'air quand la transmittance est mesurée par un spectroscope ultraviolet-visible dans un domaine de 400 à 700 nm pour analyser la transmittance de la couche mince.

13. Couche mince selon la revendication 10, comprenant en outre une couche protégeant de polysilazane.

14. Couche mince selon la revendication 10, dans laquelle le durcissement est exécuté en utilisant un ou plus procédés de chauffage, d'illumination, d'agencement de température ambiante, d'injection d'eau, d'injection de catalyseur.
